(19) Europäisches Patentamt
European Patent Office
Office européen des brevets

(11) Veröffentlichungsnummer: **0 527 441 A2**

(12) **EUROPÄISCHE PATENTANMELDUNG**

(21) Anmeldenummer: **92113467.2**

(22) Anmeldetag: **07.08.92**

(51) Int. Cl.5: **C09B 62/517**, //D06P3/66, D06P3/10

(30) Priorität: **09.08.91 DE 4126395**

(43) Veröffentlichungstag der Anmeldung: **17.02.93 Patentblatt 93/07**

(84) Benannte Vertragsstaaten: **BE CH DE ES FR GB IT LI PT**

(71) Anmelder: **HOECHST AKTIENGESELLSCHAFT**
**Postfach 80 03 20**
**W-6230 Frankfurt am Main 80(DE)**

(72) Erfinder: **Beck, Thomas, Dr.**
**Altkönigstrasse 1**
**W-6232 Bad Soden/Taunus(DE)**
Erfinder: **Russ, Werner Hubert, Dr.**
**Wingertstrasse 8a**
**W-6093 Flörsheim am Main(DE)**
Erfinder: **Springer, Hartmut, Dr.**
**Am Erdbeerstein 27**
**W-6240 Königstein/Taunus(DE)**
Erfinder: **Bänfer, Marcus**
**Joseph-Haydn-Strasse 15**
**W-6232 Bad Soden/Taunus(DE)**

(54) **Wasserlösliche Phthalocyaninfarbstoffe, Verfahren zu ihrer Herstellung und ihre Verwendung.**

(57) Phthalocyaninfarbstoffe, insbesondere Kupfer- und Nickelphthalocyaninfarbstoffe die eine oder mehrere Gruppen der nachstehend angegebenen und definierten Formel

$$-CO-\underset{\displaystyle R}{\underset{|}{N}}-X-A-(Y-Z)_m$$

oder eine oder mehrere Carboxygruppen oder beide Gruppen enthalten und die weiterhin eine oder mehrere Sulfogruppen, übliche Sulfonamidgruppen und/oder Gruppen der nachstehend angegebenen und definierten allgemeinen Formel

$$-SO_2-\underset{\displaystyle R}{\underset{|}{N}}-X-A-(Y-Z)_m$$

besitzen können, färben hydroxy- und/oder carbonamidgruppenhaltige Materialien, insbesondere Fasermaterialien, wie beispielsweise Cellulosefasermaterialien, Wolle und Polyamidfasern, in farbstarken, echten, vorwiegend grünen Tönen.

In den Formeln bedeuten:
R ist Wasserstoff oder ein niederer gegebenenfalls substituierter aliphatischer Rest, A ist ein aromatischer carbocyclischer oder aromatischer heterocyclischer Rest oder ein Alkylenrest, der durch1 oder 2 Heterogruppen unterbrochen sein kann, X ist eine direkte Bindung oder ein zweiwertiges organisches Brückenglied oder bildet

EP 0 527 441 A2

zusammen mit der Gruppe -N(R)- den bivalenten Rest eines gesättigten, zwei N-Atome enthaltenden Heterocyclus, Y ist im Falle, daß A einen aromatischen Rest darstellt, eine direkte Bindung oder eine Carbamoyl-alkylen-Gruppe oder eine Methylen-, Ethylen-, Methylamino- oder β-Cyanoethyl-amino-Gruppe, oder Y ist niederes Alkylen, wobei in diesem Falle die Gruppierung -X-A- zwingend eine direkte Bindung und m gleich 2 ist, Z ist eine faserreaktive Gruppe der Vinylsulfonreihe und m ist die Zahl 1 oder 2.

Die Erfindung liegt auf dem technischen Gebiet der faserreaktiven Farbstoffe.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolgedessen besteht weiterhin ein Bedarf nach neuen Reaktivfarbstoffen, nicht nur in Bezug auf Echtheiten der mit ihnen erhältlichen Färbungen, sondern auch auf einen erhöhten Fixiergrad der Farbstoffe auf dem zu färbenden Material. Faserreaktive Phthalocyaninfarbstoffe sind beispielsweise aus den US-Patentschriften Nrs. 4 237 050, 4 350 632 und 4 745 187 bekannt; sie enthalten, über einen N-Aryl- oder N-Alkyl-sulfonamid-Rest gebunden, eine faserreaktive Gruppe aus der Vinylsulfonreihe. Trotz der sehr guten färberischen Eigenschaften dieser bekannten Farbstoffe war es wünschenswert, Farbstoffe zu entwickeln, die einen erhöhten Fixiergrad besitzen und Färbungen mit besserer coloristischer Farbstärke liefern.

Mit der vorliegenden Erfindung wurden nunmehr neue, wasserlösliche, verbesserte Phthalocyaninfarbstoffe gefunden, mit denen qualitativ hochwertige Färbungen in einem brillanten Grün erhalten werden und die der allgemeinen Formel (1) entsprechen (die Formel (1) wie auch die nachstehend erwähnten Formeln sind in Formelblättern nach den Beispielen aufgezeichnet).

In Formel (1) bedeuten:

Pc ist der Rest des metallfreien oder eines metallhaltigen Phthalocyanins, wie beispielsweise des Kupfer-, Kobalt- oder Nickelphthalocyanins, wobei der Phthalocyaninrest noch in den 3- und/oder 4-Stellungen der carbocyclischen aromatischen Ringe des Phthalocyanins substituiert sein kann, wie beispielsweise durch Halogenatome, wie Chloratome, oder Arylreste, wie Phenylreste, und in welchem die Sulfochlorid-, Sulfonamid- und/oder Sulfogruppen in den 3- und/oder 4-Stellungen der carbocyclischen aromatischen Ringe des Phthalocyanins gebunden sind;

R ist ein Wasserstoffatom oder ein niederer aliphatischer Rest, insbesondere eine niedere Alkylgruppe, der substituiert sein kann;

$R^1$ ist ein Wasserstoffatom oder ein niederer Alkylrest, der substituiert sein kann, oder ein Cycloalkylrest von 5 bis 8 C-Atomen, wie der Cyclohexylrest, und

$R^2$ ist ein Wasserstoffatom oder eine niedere Alkylgruppe, die substituiert sein kann, oder ein Arylrest, der substituiert sein kann, oder die Cyanogruppe, oder

$R^1$ und $R^2$ bilden gemeinsam mit dem Stickstoffatom und einem Alkylenrest von 3 bis 8 C-Atomen, bevorzugt 4 bis 6 C-Atomen, oder mit einem weiteren Heteroatom, wie einem Stickstoffatom oder einem Sauerstoffatom, und zwei niederen Alkylenresten den Rest eines 4- bis 8-gliedrigen heterocyclischen Rings, wie beispielsweise den N-Piperidino-, N-Piperazino- oder N-Morpholino-Rest;

A ist ein aromatischer carbocyclischer oder aromatischer heterocyclischer Rest, bevorzugt ein gegebenenfalls subtituierter Phenylen- oder Naphthylenrest, insbesondere ein Phenylen- oder Naphthylenrest, die beide durch 1 bis 3 Substituenten aus der Gruppe niederes Alkyl, wie Methyl und Ethyl, niederes Alkoxy, wie Methoxy und Ethoxy, Halogen, wie Chlor und Brom, Carboxy, Nitro und Sulfo substituiert sein können, oder ist ein Alkylenrest von 1 bis 8 C-Atomen, bevorzugt 2 bis 6 C-Atomen, oder ein Alkylenrest von 2 bis 8 C-Atomen, der durch 1 oder 2 Heterogruppen, wie -O- oder -NH-, unterbrochen sein kann;

X ist eine direkte Bindung oder ein zweiwertiges organisches Bindeglied, wie beispielsweise ein Alkylenrest von 1 bis 6 C-Atomen, insbesondere ein Ethylen- oder Propylenrest, oder eine Alkylenaminogruppe der Formel

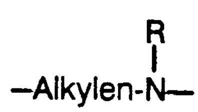

in welcher

Alkylen ein Alkylenrest von 1 bis 6 C-Atomen, bevorzugt von 1 bis 4 C-Atomen, ist und

R eine der obengenannten Bedeutungen hat,

oder ist beispielsweise ein Rest der Formel (2a), (2b), (2c), (2d), (2e), (2f), (2h) oder (2j), hiervon bevorzugt ein Rest der Formel (2k), $-(CH_2)_k$-oder

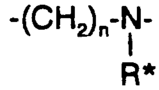

in welchen

k eine ganze Zahl von 1 bis 5,

n eine ganze Zahl von 2 bis 6 und

R* ein Wasserstoffatom ode eine Alkylgruppe von 1 bis 5 C-Atomen, wie Ethyl und insbesondere Methyl, bedeutet,

oder

X bildet zusammen mit der Gruppe -H(R)- einen Rest der allgemeinen Formel (3)

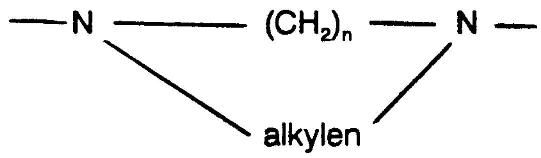 (3)

in welcher

n die obengenannte Bedeutung hat und

alkylen einen Alkylenrest von 1 bis 6 C-Atomen, bevorzugt 1 bis 4 C-Atomen, darstellt;

Y ist im Falle, daR A einen aromatischen Rest darstellt, eine direkte Bindung oder eine Gruppe der Formel -CO-NH-alkylen- mit alkylen der obigen Bedeutung, $-CH_2-$, $-CH_2-CH_2-$,

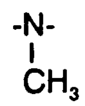 oder 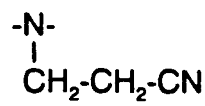 ,

oder

Y ist ein Alkylenrest von 2 bis 6 C-Atomen, bevorzugt von 2 bis 4 C-Atomen, wie der 1,2-Ethylen- oder 1,3-Propylenrest, wobei in diesem Falle die Gruppierung -X-A- zusammen zwingend eine direkte Bindung und m gleich 2 ist;

Z ist die Vinylsulfonylgruppe oder ist eine Ethylsulfonylgruppe, die in $\beta$-Stellung einen alkalisch eliminierbaren Substituenten enthalt, wie beispielsweise die $\beta$-Chlorethylsulfonyl-, $\beta$-Acetoxyethylsulfonyl-, $\beta$-Thiosulfatoethylsulfonyl- oder $\beta$-Phosphatoethylsulfonyl-Gruppe, bevorzugt die $\beta$-Sulfatoethylsulfonyl-Gruppe;

a ist eine ganze Zahl von Null bis 4, bevorzugt Null, 1 oder 2; insbesondere 1 oder 2;

b ist eine ganze Zahl von Null bis 3;

c ist eine ganze Zahl von Null bis 3;

d ist eine ganze Zahl von Null bis 3;

e ist eine ganze Zahl von Null bis 2;

die Summe von $(a + b + c + d + e)$ ist höchstens 4;

die Summe von $(a + b)$ ist 1 bis 4, bevorzugt 1,2 oder 3;

die Summe von $(a + d)$ ist 1 bis 4;

die Summe von $(c + d)$ ist Null bis 4;

m ist die Zahl 1 oder 2, bevorzugt 1;

M ist ein Wasserstoffatom oder ein Alkalimetall, wie Natrium, Kalium oder Lithium, oder ein anderes salzbildendes Metall.

Die Formelglieder können zueinander gleiche oder voneinander verschiedene Bedeutungen besitzen.

Die erfindungsgemäßen Phthalocyaninfarbstoffe werden in der Regel in Form von Gemischen der Einzelverbindungen der allgemeinen Formel (1) erhalten, wobei sich diese Einzelverbindungen voneinander durch den Substitutionsgrad der Carboxy-, Sulfo-, Carbonamid- und Sulfonamidgruppen an den Phthalocyaninrest unterscheiden, d.h. durch die Größe der Indices a, b, c, d und e. Die Formeln der erfindungsgemäßen Phthalocyaninfarbstoffe haben deshalb Indices, die in der Regel gebrochene Zahlen sind.

Eine Sulfogruppe ist eine Gruppe der allgemeinen Formel $-SO_3M$ mit M der obengenannten Bedeutung; in gleicher Weise ist eine Carboxygruppe eine Gruppe der allgemeinen Formel -COOM, eine Sulfatogruppe eine Gruppe der allgemeinen Formel $-OSO_3M$, eine Thiosulfatogruppe eine Gruppe der allgemeinen Formel $-S-SO_3M$ und eine Phosphatogruppe eine Gruppe der allgemeinen Formel $-OPO_3M_2$, jeweils mit M der obengenannten Bedeutung.

Die erfindungsgemäßen Phthalocyaninfarbstoffe der Formel (1) liegen in Form ihrer Salze, wie der Alkalimetallsalze, vor und finden als solche ihre Verwendung zum Färben von Fasermaterialien.

Die im vorhergehenden und im nachfolgenden benutzte Angabe "niedere" bedeutet, daß die damit bezeichneten Gruppen Alkylreste oder Alkylenreste von 1 bis 6 C-Atomen, bevorzugt von 1 bis 4 C-Atomen, enthalten bzw. sind. Die aliphatischen Reste und die Arylreste der Formelglieder R, $R^1$ und $R^2$ können, wie angegeben, Substituenten enthalten. Bei den Alkylresten, bevorzugt niedere Alkylgruppen, sind die Substituenten bevorzugt Hydroxy, niederes Alkoxy, Chlor, Sulfato, Cyano, Sulfo, Carboxy, Phenyl, Sulfophenyl und Carboxyphenyl, wobei diese Alkylreste, falls substituiert, bevorzugt 1 oder 2 solche Substituenten enthalten. Arylreste sind bevorzugt gegebenenfalls substituierte Naphthylreste, wie sulfosubstituierte Naphthylreste, und insbesondere substituierte Phenylreste, vorzugsweise solche mit 1 oder 2 Substituenten aus der Gruppe Methyl, Ethyl, Methoxy, Ethoxy, Chlor, Carboxy und Sulfo. Alkylreste sind bevorzugt die Methyl- oder Ethylgruppe, und Alkoxyreste sind bevorzugt die Ethoxy- und insbesondere die Methoxygruppe.

Bevorzugte Verbindungen der allgemeinen Formel (1) sind solche, in welchen e für die Zahl Null steht oder im Falle, daß e größer als Null ist, $R^1$ und $R^2$ beide ein Wasserstoffatom bedeuten. Weiterhin bevorzugt sind solche Verbindungen, in denen Pc den Kuperphthalocyaninrest bedeutet, und des weiteren solche Verbindungen entsprechend der allgemeinen Formel (1), in welchen b, c und e jeweils die Bedeutung von Null besitzen.

Bevorzugt sind weiterhin Verbindungen der allgemeinen Formel (1), in welchen R ein Wasserstoffatom bedeutet, des weiteren solche, in welchen A der meta- oder para-Phenylenrest ist, der durch Sulfo, Methyl- und/oder Methoxy substituiert sein kann, oder ein Ethylen- oder n-Propylenrest ist; des weiteren sind Verbindungen bevorzugt, in welchen X oder Y oder beide eine direkte Bindung bedeuten.

Reste der allgemeinen Formel $-N(R)-X-A-(Y-Z)_m$, die in den Verbindungen der allgemeinen Formel (1) enthalten sind, sind beispielsweise 2-(β-Sulfatoethylsulfonyl)-phenyl-amino, 3-(β-Sulfatoethylsulfonyl)-phenyl-amino, 4-(β-Sulfatoethylsulfonyl)-phenyl-amino, 2-Carboxy-5-(β-sulfatoethylsulfonyl)-phenyl-amino, 2-Chlor-3-(β-Sulfatoethylsulfonyl)-phenyl-amino, 2-Chlor-4-(β-sulfatoethylsulfonyl)-phenyl-amino, 2-Ethoxy-4- oder -5-(β-sulfatoethylsulfonyl)-phenyl-amino, 2-Ethyl-4-(β-sulfatoethylsulfonyl)-phenyl-amino, 2-Methoxy-5-(β-sulfatoethylsulfonyl)-phenyl-amino, 2,4-Diethoxy-5-(β-sulfatoethylsulfonyl)-phenyl-amino, 2,4-Dimethoxy-5-(β-sulfatoethylsulfonyl)-phenyl-amino, 2,5-Dimethoxy-4-(β-sulfatoethylsulfonyl)-phenyl-amino, 2-Methoxy-5-methyl-4-(β-sulfatoethylsulfonyl)-phenyl-amino, 2- oder 3- oder 4-(β-Thiosulfatoethylsulfonyl)-phenyl-amino, 2-Methoxy-5-(β-thiosulfatoethylsulfonyl)-phenyl-amino, 2-Sulfo-4-(β-phosphatoethylsulfonyl)-phenyl-amino, 2-Sulfo-4-vinylsulfonyl-phenyl-amino, 2-Hydroxy-4- oder 5-(β-sulfatoethylsulfonyl)-phenyl-amino, 2-Chlor-4- oder -5-(β-chlorethylsulfonyl)-phenyl-amino, 2-Hydroxy-3-sulfo-5-(β-sulfatoethylsulfonyl)-phenyl-amino, 3- oder 4-(β-Acetoxyethylsulfonyl)-phenyl-amino, 2-Methoxy-4-[β-(N-methyl-tauryl)-ethylsulfonyl]-phenyl-amino, 5-(β-Sulfatoethylsulfonyl)-naphth-2-yl-amino, 6- oder 7- oder 8-(β-Sulfatoethylsulfonyl)-naphth-2-yl-amino,6-(β-Sulfatoethylsulfonyl)-1-sulfo-naphth-2-yl-amino, 5-(β-Sulfatoethylsulfonyl)-1-sulfo-naphth-2-yl-amino, 8-(β-Sulfatoethylsulfonyl)-6-sulfo-naphth-2-yl-amino, β-[4-(β'-Sulfatoethylsulfonyl)-phen]-ethylamino, β-[2-Sulfo-4-(β'-sulfatoethylsulfonyl)-phen]-ethylamino, β-(β'-Chlorethylsulfonyl)ethylamino, β-(β'-Sulfatoethylsulfonyl)-ethylamino, β-(Vinylsulfonyl)-ethylamino, γ-(β'-Chlorethylsulfonyl)-propylamino, γ-(β'-Sulfatoethylsulfonyl)-propylamino, γ-(β'-Bromethylsulfonyl)-propylamino, γ-(Vinylsulfonyl)-propylamino, 1-Methyl-1-(β-sulfatoethylsulfonyl)-1-ethylamino, δ-(β'-Sulfatoethylsulfonyl)-butylamino 2-Methyl-2-(β-chlorethylsulfonyl)-1-propylamino, ω-(β'-Chlorethylsulfonyl)-pentylamino, β-(β'-Chlorethylsulfonyl)-n-hexylamino, N-Methyl-N-[β-(β'-chlorethylsulfonyl)-ethyl]-amino, N-Ethyl-N-[β-(β'-chlorethylsulfonyl)-ethyl]-amino, N-n-Propyl-N-[β-(β'-chlorethylsulfonyl)-ethyl]-amino, N-n-Butyl-N-[β-(β'-chlorethylsulfonyl)-ethyl]-amino, N-n-Pentyl-N-N-[β-(β'-chlorethylsulfonyl)-ethyl]-amino, N-n-Hexyl-N-[β-(β'-chlorethylsulfonyl)-ethyl]-amino, N-Carboxymethyl-N-[β-(β'-brommethylsulfonyl)-ethyl]-amino, N-Sulfatomethyl-N-[β-(β'-chlorethylsulfonyl)-ethyl]-amino, N-(β-Carboxyethyl)-N-[γ'-chlorethylsulfonyl)-propyl]-amino, N-(β-Sulfatoethyl)-N-[γ'-(β''-chlorethylsulfonyl)-propyl]-amino, N-(β-Sulfatoethyl)-N-[δ'-(β''-chlorethylsulfonyl)-butyl]-amino, N-(β-Ethoxyethyl)-N-[δ'-(β''-chlorethylsulfonyl)-butyl]-amino, N-(γ-Chlorpropyl)-N-[β'-(β''-chlorethylsulfonyl)-ethyl]-amino, N-Phenyl-N-[β-(β'-chlorethylsulfonyl)-ethyl]-amino, N-(4-Chlorphenyl)-N-[β-(β'-chlorethylsulfonyl)-ethyl]-amino, N-(2-Methylphenyl)-N-[β-(β'-chlorethylsulfonyl)-ethyl]-amino, N-(4-Methoxyphenyl)-N-[β-(β'-chlorethylsulfonyl)-ethyl]-amino, N-(3-Sulfophe-

nyl)-N-[$\beta$-($\beta$'-chlorethylsulfonyl)-ethyl]-amino, N-(4-Sulfophenyl)-N-[$\beta$-($\beta$'-chlorethylsulfonyl)-ethyl]-amino, Bis-[$\beta$-($\beta$'-chlorethylsulfonyl)-ethyl]amino, Bis-[$\beta$-($\beta$'-bromethylsulfonyl)-ethyl]-amino, Bis-[$\gamma$-($\beta$'-chlorethylsulfonyl)-propyl]-amino, Bis-[$\delta$-($\beta$'-chlorethylsulfonyl)-butyl]-amino, Bis-($\beta$-vinylsulfonyl-ethyl)-amino, N-($\beta$-Cyanoethyl)-N-[$\gamma$'-($\beta$''-chlorethylsulfonyl)-propyl]-amino, $\beta$-[$\beta$'-($\beta$''-Chlorethylsulfonyl)-ethylamino]-ethylamino, $\beta$ -[$\beta$'-($\beta$''-Sulfatoethylsulfonyl)-ethylamino]-ethylamino, $\beta$-[$\beta$'-($\beta$''-Chlorethylsulfonyl)-ethoxy]-ethylamino, $\beta$-[$\beta$'-($\beta$''-Sulfatoethylsulfonyl)-ethoxy]-ethylamino, 4-[$\beta$-($\beta$'-Chlorethylsulfonyl)-ethyl]-piperazin-1-yl, 4[$\gamma$-($\beta$'-Chlorethylsulfonyl)-propyl]-piperazin-1-yl, 4-[$\beta$-($\beta$'-Sulfatoethylsulfonyl)-ethyl]-piperazin-1-yl, 4-[$\gamma$-($\beta$'-Sulfatoethylsulfonyl)-propyl]-piperazin-1-yl, 3,4-Di-($\beta$-sulfatoethylsulfonyl)-phenylamino, 2,5-Di-($\beta$-sulfatoethylsulfonyl)-phenylamino, 4-[$\gamma$-($\beta$'-Sulfatoethylsulfonyl)-propoxy]-phenylamino, 2,5-Bis-[($\beta$-sulfatoethylsulfonyl)methyl]-phenylamino, 3- oder 4-{N-[$\gamma$-($\beta$'-Sulfatoethylsulfonyl)-propyl-amidocarbonyl]}-phenylamino und 3,5-Bis-{N-[$\gamma$-($\beta$'-sulfatoethylsulfonyl)-propyl-amidocarbonyl]}-phenylamino.

Reste der allgemeinen Formel $-NR^1R^2$, die in den Verbindungen der allgemeinen Formel (1) enthalten sein können, sind beispielsweise Methylamino, Ethylamino, n-Butylamino, Benzylamino, Phenylamino, $\beta$-Hydroxy-ethylamino, Dimethylamino, Diethylamino, Di-(isopropyl)-amino, N-Methyl-benzylamino, N-Methylphenylamino, N-Piperidino, N-Morpholino, Di-($\beta$-Hydroxyethyl)-amino, $\beta$-Sulfo-ethylamino, $\beta$-Carboxy-ethylamino, $\beta$ -(4-Carboxy-phenyl)-ethylamino, 3-Sulfo-phenylamino, 4-Sulfophenylamino, die primäre Aminogruppe und der Cyanamidorest.

Die vorliegende Erfindung betrifft weiterhin ein Verfahren zur Herstellung der Phthalocyaninverbindungen der allgemeinen Formel (1), das dadurch gekennzeichnet ist, daß man ein Phthalocyaninsäurechlorid der allgemeinen Formel (4)

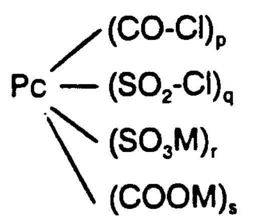

(4)

in welcher

- Pc und M die obengenannten Bedeutungen haben,
- p eine ganze Zahl von 1 bis 4 bedeutet,
- q eine ganze Zahl von Null bis 3 ist,
- r eine ganze Zahl von Null bis 3 ist und
- s eine ganze Zahl von Null bis 3 bedeutet,

wobei die Summe von (p + q + r + s) eine ganze Zahl von 1 bis 4 ist,
die Summe von (p + q) eine Zahl von 1 bis 4 und
die Summe von (r + s) eine Zahl von Null bis 3 ist,

oder eine Mischung dieser Verbindungen der allgemeinen Formel (4) in einem wäßrigen oder wäßrigorganischen Medium gleichzeitig oder in beliebiger Reihenfolge mit einem Amin der allgemeinen Formel (5)

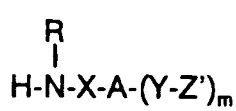

(5)

in welcher R, X, A, Y und m die obengenannten Bedeutungen haben und Z' eine der für Z genannten Bedeutungen besitzt oder die $\beta$-Hydroxyethylsulfonyl-Gruppe ist, und gegebenenfalls mit einem weiteren Amin der allgemeinen Formel (6)

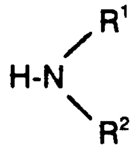

(6)

in welcher $R^1$ und $R^2$ die obengenannten Bedeutungen haben, umsetzt und im Falle, daß Z' für die β-Hydroxyethylsulfonyl-Gruppe steht, die erhaltene β-hydroxyethylsulfonylgruppenhaltige Phthalocyaninverbindung in einen Phthalocyaninfarbstoff der Formel (1) mit einem Rest Z in an und für sich bekannter Verfahrensweise überführt.

Bei der Umsetzung der Phthalocyaninsäurechloride der allgemeinen Formel (4) mit einer Aminoverbindung der allgemeinen Formel (5) oder den Aminen der allgemeinen Formel (5) und (6) kann während dieser Kondensationsreaktionen gleichzeitig eine partielle Hydrolyse der Carbonsäurechloridgruppen und eventuell vorhandener Sulfonsäurechloridgruppen erfolgen. In der Regel ist eine partielle Hydrolyse dieser Säurechloridgruppen zu Carboxy- bzw. Sulfogruppen unvermeidlich.

Geht man bei dem erfindungsgemäßen Verfahren zur Herstellung der Phthalocyaninverbindungen der allgemeinen Formel (1) von einem Ausgangsamin der Formel (5) aus, in welchem Z' die β-Hydroxyethylsulfonyl-Gruppe bedeutet, so überführt man die erhaltene Phthalocyaninverbindung, die der allgemeinen Formel (1) entspricht, in welcher jedoch Z hier die β-Hydroxyethylsulfonyl-Gruppe bedeutet, in eine erfindungsgemäße Phthalocyaninverbindung, die in β-Stellung des Ethylsulfonylrestes eine Estergruppe, wie beispielsweise die Sulfatogruppe, enthält. Diese Veresterungsreaktion erfolgt analog bekannter Verfahrensweisen mit den üblichen Veresterungs- und Acylierungsmitteln für solche Säuren, wie beispielsweise Acetanhydrid, Polyphosphorsäure, Phosphorpentachlorid und insbesondere 96-100 %ige Schwefelsäure oder Schwefeltrioxyd enthaltende Schwefelsäure, wie Oleum mit einem Schwefeltrioxydgehalt von bis zu 35 %, oder Chlorsulfonsäure zur Einführung der Sulfatogruppe. Die Umsetzung mit Schwefelsäure oder Schwefeltrioxyd enthaltender Schwefelsäure erfolgt bei einer Temperatur zwischen 0 °C und 25 °C. Die Umsetzung mit Chlorsulfonsäure kann auch in einem polaren organischen Lösemittel, wie beispielsweise N-Methylpyrrolidon, bei 10 bis 80 °C erfolgen.

Phthalocyaninfarbstoffe der allgemeinen Formel (1) können in üblicher und bekannter Verfahrensweise in Phthalocyaninfarbstoffe der allgemeinen Formel (1) mit einem anderen alkalisch eliminierbaren Substituenten im faserreaktiven Rest Z überführt werden. Solche Verfahrensweisen sind in der Literatur, faserreaktive Farbstoffe mit dem faserreaktiven Rest der Vinylsulfonreihe betreffend, zahlreich beschrieben. So können Phthalocyaninfarbstoffe mit dem β-Sulfatoethylsulfonyl-Rest durch Behandlung mit einem Alkali, wie in wäßriger Natronlauge bei einer Temperatur von 0 bis 40 °C während einiger Minuten, in die Phthalocyaninfarbstoffe mit der Vinylsulfonylgruppe für den Rest Z überführt werden. Erfindungsgemäße Phthalocyaninfarbstoffe mit dem β-Thiosulfatoethylsulfonyl-Rest lassen sich beispielsweise aus Phthalocyaninfarbstoffe mit der Vinylsulfonylgruppe durch Umsetzung mit Natriumthiosulfat gewinnen.

Die erfindungsgemäßen Kondensationsreaktionen zwischen den Verbindungen der allgemeinen Formel (4) und den Aminen der allgemeinen Formeln (5) und (6) erfolgen in Gegenwart eines Katalysators, wie Pyridin, einer Pyridinsulfonsäure-, Pyridincarbonsäure-, Pyridinsulfonamid- oder Pyridincarbonamid-Verbindung analog den aus den anfangs erwähnten US-Patentschriften bekannten Verfahrensweisen. Die erfindungsgemäßen Kondensationsreaktionen werden bei einem pH-Wert zwischen 3,5 und 8,5, vorzugsweise zwischen 4 und 8, insbesondere zwischen 5,5 und 6,5, und bei einer Temperatur zwischen 0 °C und 100 °C, vorzugsweise zwischen 5 und 40 °C, insbesondere zwischen 20 und 30 °C, durchgeführt.

Pyridinsulfonsäure-, -carbonsäure-, -sulfonsäureamid- und -carbonsäureamid-Verbindungen, die die erfindungsgemäße Kondensationsreaktion katalysieren, sind beispielsweise Pyridin-3-carbonsäure, Pyridin-2-carbonsäure, Pyridin-2-sulfonsäure, Pyridin-3-sulfonsäure, Pyridin-4-sulfonsäure, Pyridin-4-carbonsäure, Pyridin-2,3-dicarbonsäure, Pyridin-2,4-dicarbonsäure, Pyridin-2,5-dicarbonsäure, Pyridin-2,6-dicarbonsäure, Pyridin-3,4-dicarbonsäure, Pyridin-3,5-dicarbonsäure, Pyridin-2,3,4-tricarbonsäure, Pyridin-2,4,5-tricarbonsäure, 2-Methyl-pyridin-3-sulfonsäure, 4-Methyl-pyridin-3-carbonsäure, 4-Ethyl-pyridin-3-carbonsäure, 6-Methyl-pyridin-3-carbonsäure, 4,6-Dimethyl-pyridin-2-carbonsäure, 2,6-Dimethyl-pyridin-3-carbonsäure, 2-Methyl-pyridin-3,4-dicarbonsäure, Pyridin-2-sulfonamid, Pyridin-3-sulfonamid, Pyridin-4-sulfonamid, Pyridin-2,3-dicarbonsäureamid, Pyridin-2,4-dicarbonsäureamid, Pyridin-2,5-dicarbonsäureamid, Pyridin-2,6-dicarbonsäureamid, Pyridin-3,4-dicarbonsäureamid, Pyridin-3,5-dicarbonsäureamid, Pyridin-2,3,4-tricarbonsäureamid, Pyridin-2,4,5-tricarbonsäureamid, 2-Methyl-pyridin-3-sulfonsäureamid, 4-Methyl-pyridin-3-carbonsäureamid, 4-Ethyl-pyridin-3-carbonsäureamid, 6-Methyl-pyridin-3-carbonsäureamid, 4,6-Dimethylpyridin-2-carbonsäureamid, 2,6-Dimethyl-pyridin-3-carbonsäureamid, 2-Methyl-pyridin-3,4-dicarbonsäuramid, Pyridin-4-carbonsäureamid, Pyridin-3-carbonsäureamid und Pyridin-2-carbonsäureamid, bevorzugt hiervon Pyridin-3-carbonsäureamid und Pyridin-3-carbonsäure.

Phthalocyaninsulfonsäurechloride und Phthalocyanincarbonsäurechloride sind seit langem in der Literatur bekannt. Die Herstellung der Phthalocyaninsulfonsäurechloride ergibt sich beispielsweise aus Angaben in den anfangs genannten US-Patentschriften sowie aus der deutschen Patentschrift Nr. 891 121. Phthalocyanincarbonsäurechloride können analog den Angaben der US-Patentschrift Nr. 3301 814 hergestellt werden, wobei eine oder mehrere der Ausgangsverbindungen durch Carbonsäuregruppen substituiert sind. Die Überführung der so erhaltenen carboxysubstituierten Phthalocyanine in deren Carbonsäurechloridverbindungen erfolgt gemäß altbekannten Verfahrensweisen der Überführung von Carboxygruppen in Carbonsäurechloridgruppen. Phthalocyaninverbindungen, die sowohl Carbonsäurechlorid- als auch Sulfochlorid-Gruppen enthalten, können durch Sulfochlorierung der Phthalocyanincarbonsäure- oder -carbonsäurechlorid-Verbindungen erhalten werden.

Phthalocyanin-Ausgangsverbindungen der allgemeinen Formel (4) sind beispielsweise die Carbonsäurechloride und die carboxygruppenhaltigen Carbonsäurechloride des metallfreien Phthalocyanins und vorzugsweise der Kupfer-, Kobalt- und Nickelphthalocyanine, wie beispielsweise die Mono-, Di-, Tri- und Tetracarbonsäurechlorid des Kupferphthalocyanins, Kobaltphthalocyanins und Nickelphthalocyanins, so beispielsweise Kupferphthalocyanin-(3)-monocarbonsäurechlorid, Kupferphthalocyanin-(3)-dicarbonsäurechlorid, Kupferphthalocyanin-(3)-tricarbonsäurechlorid, Kupferphthalocyanin-(3)-tetracarbonsäurechlorid, Nickelphthalocyanin-(3)-tetracarbonsäurechlorid, Kobaltphthalocyanin-(3)-monocarbonsäurechlorid, Kobaltphthalocyanin-(3)-di- und -tricarbonsäurechlorid, Kupferphthalocyanin-(4)-mono- und -dicarbonsäurechlorid, Kupferphthalocyanin-(4)-tri- und -tetracarbonsäurechlorid, Kupferphthalocyanin-(3)-monocarbonsäurechlorid-disulfonsäurechlorid, Kupferphthalocyanin-(3)-dicarbonsäurechlorid-monosulfonsäurechlorid, Kupferphthalocyanin-(3)-monocarbonsäurechlorid-monocarbonsäure, Kupferphthalocyanin-(3)-dicarbonsäurechlorid-monocarbonsäure und Kupferphthalocyanin-(3)-dicarbonsäurechlorid-disulfonsäurechlorid sowie weiterhin die Säurechloride dieser Art, die am Phthalocyaninkern zusätzlich andere Substituenten, wie Phenylreste und Halogenatome, enthalten, wie beispielsweise die Carbonsäurechloride oder gemischten Carbonsäure-/Sulfonsäurechloride des Tetraphenylkupferphthalocyanins oder Tetrachlor-Nickelphthalocyanins.

Säurebindende Mittel, die in dem erfindungsgemäßen Verfahren zur Herstellung der Verbindungen der allgemeinen Formel (1) verwendet werden, sind beispielsweise die Hydroxyde, Carbonate, Hydrogencarbonate, sekundären Phosphate, tertiären Phosphate, Borate und Acetate der Metalle der ersten bis dritten Gruppe des Periodensystems, vorzugsweise der Alkalimetalle, wie von Natrium, Kalium und Lithium, und der Erdalkalimetalle, wie die des Calciums.

Das erfindungsgemäße Verfahren zur Herstellung der Verbindungen (1) wird bevorzugt in wäßrigem Medium durchgeführt. Zur Verbesserung der Löslichkeit der Ausgangs- bzw. Endprodukte im wäßrigen Reaktionsmedium kann man gegebenenfalls ein organisches Lösemittel, vorzugsweise ein Amid einer aliphatischen Carbonsäure, wie Dimethylformamid oder N-Methyl-pyrrolidon, zusetzen.

Die Abscheidung der erfindungsgemäß hergestellten Phthalocyaninfarbstoffe der allgemeinen Formel (1), nachfolgend als "Farbstoffe (1)" bezeichnet, aus den Syntheseansätzen erfolgt nach allgemein bekannten Methoden entweder durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz zugefügt werden kann. Sie haben faserreaktive Eigenschaften und besitzen sehr gute Farbstoffeigenschaften. Sie können deshalb zum Färben und Bedrucken von hydroxy- und/oder carbonamidgruppenhaltigem Material, insbesondere Fasermaterial, wie auch von Leder, verwendet werden. Ebenso können auch die bei der Synthese der erfindungsgemäßen Verbindungen anfallenden Lösungen, gegebenenfalls nach Zusatz einer Puffersubstanz, gegebenenfalls nach Konzentrierung, direkt als Flüssigpräparation der färberischen Verwendung zugeführt werden.

Gegenstand der vorliegenden Erfindung ist deshalb auch die Verwendung der Farbstoffe (1) zum Färben (einschließliches Bedrucken) von hydroxy- und carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben.

Hydroxygruppenhaltige Materialien sind natürliche oder synthetische hydroxygruppenhaltige Materialien, wie beispielsweise Cellulosefasermaterialien, auch in Form von Papier, oder deren Regeneratprodukte und Polyvinylalkohole. Cellulosefasermaterialien sind vorzugsweise Baumwolle, aber auch andere Pflanzenfasern; wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die Farbstoffe (1) lassen sich auf den genannten Substraten, insbesondere auf den genannten Fasermaterialien, nach den für wasserlösliche Farbstoffe, insbesondere für faserreaktive Farbstoffe, bekannten Anwendungstechniken applizieren und fixieren. So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, Färbungen in sehr guten Farbausbeuten und mit ausgezeichnetem Farbaufbau. Man färbt bei Temperaturen zwischen 40 und 105 °C, gegebenenfalls bei Temperaturen bis zu 130 °C unter Druck, gegebenenfalls in Gegenwart von üblichen Färbereihilfsmitteln, im wäßrigen Bad. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach den Klotzverfahren werden auf Cellulosefasern ebenfalls Färbungen mit ausgezeichneten Farbausbeuten und sehr gutem Farbaufbau erhatten, wobei durch Verweilen bei Raumtemperatur oder erhöhter Temperatur, beispielsweise bis zu etwa 60 °C, durch Dämpfen oder mit Trockenhitze in üblicher Weise fixiert werden kann.

Ebenfalls erhält man nach den üblichen Druckverfahren für Cellulosefasern, - die entweder einphasig durchgeführt werden können, beispielsweise durch Bedrucken mit einer Natriumbicarbonat oder ein anderes säurebindendes Mittel und das Farbmittel enthaltenden Druckpaste und durch anschließendes Dämpfen bei 100 bis 103 °C, oder die zweiphasig, beispielsweise durch Bedrucken mit neutraler oder schwach saurer, das Farbmittel enthaltenden Druckpaste und anschließendes Fixieren entweder durch Hindurchführen der bedruckten Ware durch ein heißes elektrolythaltiges alkalisches Bad oder durch Überklotzen mit einer alkalischen elektrolythaltigen Klotzflotte mit anschließendem Verweilen dieses behandelten Materials oder anschließendem Dämpfen oder anschließender Behandlung mit Trockenhitze, durchgeführt werden können, - farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Verbindungen erhaltenen Fixiergrade sehr hoch.

Bei der Fixierung mittels Trockenhitze nach den üblichen Thermofixierverfahren verwendet man Heißluft von 120 bis 200 °C. Neben dem üblichen Wasserdampf von 101 bis 103 °C kann auch überhitzter Dampf und Druckdampf von Temperaturen bis zu 160 °C eingesetzt werden.

Die säurebindenden und die Fixierung der Farbstoffe auf den Cellulosefasern bewirkenden Mittel sind beispielsweise wasserlösliche basische Salze der Alkalimetalle und der Erdalkalimetalle von anorganischen oder organischen Säuren, ebenso Verbindungen, die in der Hitze Alkali freisetzen.
Insbesondere sind die Alkalimetallhydroxyde und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxyd, Kaliumhydroxyd, Natriumcarbonat, Natriumbicarbonat, Kaliumcarbonat, Natriumformiat, Natriumdihydrogenphosphat und Dinatriumhydrogenphosphat.

Durch die Behandlung der Farbstoffe (1) mit den säurebindenden Mitteln, gegebenenfalls unter Wärmeeinwirkung, werden die Farbstoffe chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die Färbungen auf Polyurethan- und Polyamidfasern werden üblicherweise aus saurem Milieu ausgeführt. So kann man beispielsweise dem Färbebad Essigsäure und/oder Ammoniumsulfat und/oder Essigsäure und Ammoniumacetat oder Natriumacetat zufügen, um den gewünschten pH-Wert zu erhalten. Zur Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure oder Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40 °C in das Bad eingebracht, dort einige Zeit darin bewegt, das Färbebad dann auf den gewünschten schwach sauren, vorzugsweise schwach essigsauren pH-Wert nachgestellt und die eigentliche Färbung bei einer Temperatur zwischen 60 und 98 °C durchgeführt. Die Färbungen können aber auch bei Siedetemperatur oder bei Temperaturen bis zu 120 °C (unter Druck) ausgeführt werden.

Die mit den erfindungsgemäßen Verbindungen (1) hergestellten Färbungen und Drucke auf Cellulosefasermaterialien besitzen eine hohe Farbstärke, außerdem gute Lichtechtheiten und gute Naßechtheiten, wie Wasch-, Walk-, Wasser-, Seewasser-, Überfärbe- und Schweißechtheiten, darüber hinaus eine gute Plissierechtheit, Bügelechtheit und Reibechtheit. Besonders hervorzuheben sind deren alkalische Schweißlichtechtheit und die gute Naßlichtechtheit der mit Trinkwasser benetzten Färbungen.

Die nachstehenden Beispiele dienen zur Erläuterung der Erfindung. Die formelmäßig beschriebenen Verbindungen sind in Form der freien Säure angegeben; im allgemeinen werden sie in Form ihrer Alkalimetallsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen als solche oder in Form ihrer Salze, vorzugsweise Alkalimetallsalze, wie Natrium- oder Kaliumsalze, in die Synthese eingesetzt werden.
Die in den Beispielen genannten Teile sind Gewichtsteile, die Prozentangaben stellen Gewichtsprozente dar, sofern nicht anders vermerkt. Gewichtsteile stehen zu Volumenteilen im Verhältnis von Kilogramm zu Liter. Der Formelrest CuPc bedeutet den Kupferphthalocyaninrest, und der Formelrest NiPc stellt den Nickelphthalocyaninrest dar.

Die für die erfindungsgemäßen Verbindungen angegebenen Absorptionsmaxima ($\lambda_{max}$) im sichtbaren Bereich wurden anhand ihrer Alkalimetallsalze in wäßriger Lösung ermittelt. In den Tabellenbeispielen sind die $\lambda_{max}$ Werte bei der Farbtonangabe in Klammern gesetzt; die Wellenlängenangabe bezieht sich auf nm.

Beispiel A

299 Teile Phthalsäureanhydrid werden mit 131 Teilen Benzoltricarbonsäureanhydrid, 78 Teilen Ammoniumchlorid, 952 Teilen Harnstoff, 12 Teilen Ammoniummolybdat und 200 Teilen Kupfersulfat vermahlen. Die Mischung trägt man in 800 Teile Nitrobenzol ein und führt die Umsetzung bei einer Temperatur zwischen 160 und 190 °C während mehrerer Stunden durch. Nach Beendigung der Reaktion wird das ausgefallene Produkt abfiltriert, mit Ethanol gewaschen, sodann in eine 20%ige wäßrige Natronlauge eingetragen, darin verrührt und wiederum abgesaugt, mit etwas Wasser gewaschen und getrocknet. Zur Umkristallisation der erhaltenen Kupferphthalocyanin-monocarbonsäur löst man sie in konz. Schwefelsäure, rührt diese Lösung langsam in Eis ein und filtriert die ausgefallene Kupferphthalocyaninmonocarbonsäure ab.

Beispiel B

63,8 Teile Kupferphthalocyanin-monocarbonsäure werden in 100 Teile Chlorsulfonsäure eingetragen, und die beiden Reaktanten werden während etwa vier Stunden bei einer Temperatur zwischen 120 und 130 °C miteinander umgesetzt. Anschließend gibt man 44 Teile Thionylchlorid hinzu und führt die Umsetzung während etwa vier Stunden bei 60 bis 90 °C durch. Danach gibt man den Reaktionsansatz auf Eis und filtriert den Rückstand ab. Man erhält ein chlorsulfonylgruppenhaltiges Kupferphthalocyanin-monocarbonsäurechlorid mit durchschnittlich 2,1 Sulfonylchloridgruppen im Molekül.

Beispiel C

Man gibt 78 Teile Kupferphthalocyanin-monocarbonsäure in 200 Teile Chlorsulfonsäure und erhitzt den Ansatz während etwa vier Stunden bei einer Temperatur zwischen 140 und 150 °C. Anschließend gibt man 100 Teile Thionylchlorid hinzu und führt die Umsetzung während etwa vier Stunden bei 70 bis 90 °C durch. Nach Beendigung der Reaktion gibt man den Ansatz auf Eis und filtriert den Rückstand ab. Es wird ein chlorsulfonylgruppenhaltiges Kupferphthalocyanin-monocarbonsäurechlorid mit durchschnittlich zwei Sulfonylchloridgruppen im Molekül erhalten.

Beispiel D

Man trägt 350 Teile Kupferphthalocyanin-monocarbonsäure in 1000 Teile Chlorsulfonsäure ein, erhitzt den Ansatz während etwa vier Stunden bei einer Temperatur zwischen 153 und 156 °C, gibt danach 430 Teile Thionylchlorid hinzu, hält den Ansatz während etwa vier Stunden bei 60 bis 90 °C und gibt nach Beendigung dieser Reaktion die erhaltene Reaktionslösung auf Eis und filtriert den Rückstand ab. Man erhält ein chlorsulfonylgruppenhaltiges Kupferphthalocyaninmonocarbonsäurechlorid, das im Molekül durchschnittlich 2,5 Sulfonylchloridgruppen enthält.

Beispiel E

Zur Herstellung der Nickelphthalocyanin-monocarbonsäure werden 299 Teile Phthalsäureanhydrid mit 131 Teilen Benzoltricarbonsäureanhydrid, 78 Teilen Ammoniumchlorid, 952 Teilen Harnstoff, 12 Teilen Ammoniummolybdat und 180 Teile Nickelsulfat vermahlen. Die Mischung trägt man in 800 Teile Nitrobenzol ein und führt die Umsetzung bei einer Temperatur zwischen 160 und 190° C während mehrerer Stunden durch. Nach Beendigung der Reaktion wird das ausgefallene Produkt abfiltriert, mit Ethanol gewaschen, sodann in eine 20%ige wäßrige Natronlauge eingetragen, darin verrührt und wiederum abgesaugt, mit etwas Wasser gewaschen und getrocknet. Zur Umkristallisation der erhaltenen Nickelphthalocyanin-monocarbonsäure löst man sie in konz. Schwefelsäure, rührt diese Lösung langsam in Eis ein und filtriert die ausgefallene Nickelphthalocyaninmonocarbonsäure ab.

Beispiel F

Man trägt 350 Teile Nickelphthalocyanin-monocarbonsäure in 1000 Teile Chlorsulfonsäure ein, erhitzt den Ansatz während etwa vier Stunden bei einer Temperatur zwischen 153 und 156° C, gibt danach 430 Teile Thionylchlorid hinzu, hält den Ansatz während etwa vier Stunden bei 60 bis 90° C und gibt nach Beendigung dieser Reaktion die erhaltene Reaktionslösung auf Eis und filtriert den Rückstand ab. Man erhält ein chlorsulfonylgruppenhaltiges Nickelphthalocyaninmonocarbonsäurechlorid, das im Molekül durchschnittlich 2,5 Sulfonylchloridgruppen enthält.

Beispiel 1

Zu einer Lösung mit einem pH-Wert von 6,5 von 42,1 Teilen 4-(β-Sulfatoethylsulfonyl)-anilin in 100 Teilen Wasser gibt man unter gutem Rühren 23,2 Teile des chlorsulfonylgruppenhaltigen Kupferphthalocyaninmonocarbonsäurechlorids des Beispieles C (die Kupferphthalocyaninverbindung wird in in Form eines feuchten Filterkuchens eingesetzt). Sodann gibt man 5,9 Teile Nicotinsäureamid hinzu. Die Reaktion setzt langsam ein und man hält sie bei einer Temperatur von 20 bis 25° C und bei einem pH-Wert von 6 bis 6,5 während etwa sieben Stunden.

Aus der erhaltenen klaren blaugrünen Lösung isoliert man den erfindungsgemäßen Kupferphthalocyaninfarbstoff, dessen Zusammensetzung der, in Form der freien Säure geschrieben, Formel (10) (Formel s. Formelblätter nach dem letzten Beispiel) entspricht, in üblicher Weise durch Aussalzen mit Natriumchlorid oder durch Eindampfen oder Sprühtrocknung. Der erfindungsgemäße Farbstoffzeigt im sichtbaren Bereich ein Absorptionsmaximum bei 660 nm und besitzt sehr gute faserreaktive Farbstoffeigenschaften. Er färbt die in der Beschreibung genannten Materialien, wie insbesondere Cellulosefasermaterialien, nach den für faserreaktive Farbstoffe üblichen Färbe- und Druckverfahren in grünen bis türkisblauen Tönen mit sehr guten Echtheitseigenschaften.

Beispiel 2

Eine Lösung mit einem pH-Wert von 6,5 von 42,1 Teilen 3-(β-Sulfatoethylsulfonyl)-anilin in 100 Teilen Wasser werden unter gutem Rühren mit 23,2 Teilen der chlorsulfonylgruppenhaltigen Kupferphthalocyaninmonocarbonsäurechlorid-Verbindung des Beispieles C versetzt (die Kupferphthalocyaninverbindung wird in Form des feuchten Filterkuchens eingetragen). Sodann gibt man 5,9 Teile Nicotinsäureamid hinzu. Die Reaktion setzt langsam ein, und man hält sie bei einer Temperatur von 20 bis 25° C und bei einem pH-Wert zwischen 6 und 6,5 während etwa 7 Stunden.

Man isoliert den erfindungsgemäßen Phthalocyaninfarbstoff aus der klaren, blaugrünen Lösung durch Aussalzen mit Natriumchlorid oder durch Sprühtrocknung. Seine chemische Zusammensetzung entspricht der, in Form der freien Säure geschrieben, Formel (11) (Formel s. Formelblätter nach dem letzten Beispiel). Er zeigt im sichtbaren Bereich ein Absorptionsmaximum bei 660 nm und besitzt sehr gute faserreaktive Farbstoffeigenschaften. Nach den in der Technik üblichen Anwendungsverfahren liefert er beispielsweise auf Baumwolle farbstarke, grüne bis türkisblaue Färbungen mit guten Echtheitseigenschaften.

Beispiel 3

In eine Lösung mit einem pH-Wert von 6,5 von 43 Teilen 4-(β-Sulfatoethylsulfonyl)-anilin in 100 Teilen Wasser werden unter gutem Rühren 23,2 Teile der chlorsulfongruppenhaltigen Kupferphthalocyaninmonocarbonsäurechlorid-Verbindungvon Beispiel D in Form des feuchten Filterkuchens eingetragen. Man

gibt 5,9 Teile Nicotinsäureamid hinzu und führt die Umsetzung während etwa sieben Stunden bei 20 bis 25 ° C und einem pH-Wert von 6 bis 6,5 durch.

Aus der klaren blaugrünen Lösung wird der gebildete Phthalocyaninfarbstoff, dessen chemische Konstitution durch die, in Form der freien Säure geschrieben, Formel (12) (Formel s. Formelblätter nach dem letzten Beispiel) wiedergegeben werden kann, auf üblichem Wege isoliert. Er besitzt im sichtbaren Bereich ein Absorptionsmaximum bei 660 nm und liefert nach den in der Technik für faserreaktive Farbstoffe üblichen Applikations- und Fixierverfahren beispielsweise auf Baumwolle farbstarke, grüne Färbungen mit guten Echtheitseigenschaften.

Beispiel 4

Zur Herstellung eines erfindungsgemäßen Kupferphthalocyaninfarbstoffes verfährt man gemäß der Verfahrensweise des Beispieles 3, geht jedoch von einer Lösung mit einem pH-Wert von 6,5 von 43 Teilen 3-(β-Sulfatoethylsulfonyl)-anilin in 150 Teilen Wasser aus. Man erhält einen erfindungsgemäßen Kupferphthalocyaninfarbstoff, dessen chemische Konstitution der, in Form der freien Säure geschrieben, Formel (13) entspricht. Im sichtbaren Bereich zeigt er ein Absorptionsmaximum bei 660 nm. Nach den Färbeweisen für faserreaktive Farbstoffe erhält man mit ihm auf den in der Beschreibung genannten Materialien, wie insbesondere Cellulosefasermaterialien, farbstarke, grüne Färbungen mit guten Echtheitseigenschaften.

Beispiele 5 bis 22

In den nachfolgenden Tabellenbeispielen sind weitere erfindungsgemäße Phthalocyaninfarbstoffe entsprechend der allgemeinen Formel (A) (Formel s. Formelblätter nach dem letzten Beispiel) mit Hilfe von der Formelkomponenten beschrieben. Sie lassen sich in erfindungsgemäßer Weise, beispielsweise nach einem der obigen Ausführungsbeispiele, mittels ihrer aus dem jeweiligen Tabellenbeispiel in Verbindung mit der Formel (A) ersichtlichen Komponenten (so einem sulfonylgruppenhaltigen und gegebenenfalls sulfogruppenhaltigen Kupferphthalocyanin-mono- oder -dicarbonsäurechlorid und einer Aminoverbindung entsprechend der in der Beschreibung angegebenen allgemeinen Formel (5)) herstellen. Sie besitzen faserreaktive Farbstoffeigenschaften und liefern insbesondere auf Cellulosefasermaterialien nach den für faserreaktive Farbstoffe üblichen Applikations- und Fixiermethoden farbstarke, echte Färbungen und Drucke in dem in dem jeweiligen Tabellenbeispiel für Färbungen auf Baumwolle angegebenen Farbton.

| Bsp | Rest $R^A$ | Index A | Index B | Farbton |
|---|---|---|---|---|
| 5 | 2,5-Di-(ß-sulfatoethylsulfonyl)-phenylamino | 1,2 | 2,3 | grün (660) |
| 6 | 2-(ß-Sulfatoethylsulfonyl)-ethylamino | 2,0 | 1,5 | grün (663) |
| 7 | 2-(ß-Chlorethylsulfonyl)-ethylamino | 2,0 | 1.5 | grün (663) |
| 8 | 2-(ß-Sulfatoethylsulfonyl)-phenylamino | 1,1 | 2,4 | grün (661) |
| 9 | 2-Methoxy-5-(ß-sulfatoethylsulfonyl)-phenylamino | 1,3 | 2,2 | grün (664) |
| 10 | 2-Methoxy-4-(ß-sulfatoethylsulfonyl)-phenylamino | 1,3 | 2,2 | grün (664) |
| 11 | N-Ethyl-4-(ß-sulfatoethylsulfonyl)-phenylamino | 1,0 | 2,5 | grün (665) |
| 12 | N-Ethyl-3-(ß-sulfatoethylsulfonyl)-phenylamino | 1,1 | 2,4 | grün (665) |
| 13 | 2-Sulfo-5-(ß-sulfatoethylsulfonyl)-phenylamino | 1,4 | 2,1 | grün (659) |
| 14 | 2-Carboxy-5-(ß-sulfatoethylsulfonyl)-phenylamino | 1,3 | 2,2 | grün (659) |
| 15 | 2-Hydroxy-5-(ß-sulfatoethylsulfonyl)-phenylamino | 1,7 | 1,8 | grün (661) |
| 16 | 2-Hydroxy-4-(ß-sulfatoethylsulfonyl)-phenylamino | 1,8 | 1,7 | grün (661) |
| 17 | 3-(ß-Sulfatoethylsulfonyl)-propylamino | 2,0 | 1,5 | grün (663) |

| Bsp | Rest $R^A$ | Index A | Index B | Farbton |
|---|---|---|---|---|
| 18 | 3-(ß-Chlorethylsulfonyl)-propylamino | 2,1 | 1,4 | grün (663) |
| 19 | ß-[4-(ß'-Sulfatoethylsulfonyl)-phenyl]-ethylamino | 2,0 | 1,5 | grün (662) |
| 20 | ß-[2-Sulfo-5-(ß'-sulfatoethylsulfonyl)-phenyl]-ethylamino | 2,0 | 1,5 | grün (662) |
| 21 | N,N-Bis-[ß-(ß'-chlorethylsulfonyl)-ethyl]-amino | 1,9 | 1,6 | grün (662) |
| 22 | 3,4-Di-(ß-sulfatoethylsulfonyl)-phenylamino | 1,2 | 2,3 | grün (660) |

Beispiel 23

Man trägt unter gutem Rühren 23,2 Teile der chlorsulfonylgruppenhaltigen Kupferphthalocyanin-monocarbonsäurechloridVerbindung von Beispiel D in Form des feuchten Filterkuchens in ein Gemisch aus 100 Teilen Wasser und 7 Teilen einer 25 %igen wäßrigen Ammoniaklösung bei 20 °C und anschließend eine wäßrige Lösung mit einem pH-Wert von 6,5 von 43 Teilen 4-(β-Sulfatoethylsulfonyl)-anilin in 100 Teilen Wasser und 5,9 Teile Nicotinsäureamid ein. Man hält die einsetzende Reaktion bei einer Temperatur von 20 bis 25 °C und bei einem pH-Wert von 6 bis 6,5 während etwa sieben Stunden.
Aus der erhaltenen klaren blaugrünen Lösung wird die erfindungsgemäße Phthalocyaninverbindung in üblicher Weise durch Eindampfen unter reduziertem Druck oder durch Aussalzen mit Natriumchlorid isoliert. Man erhält ein elektrolythaltiges (vorwiegend natriumchloridhaltiges) grünblaues Pulver mit dem Alkalimetallsalz (Natriumsalz) der Verbindung der Formel (14) (Formel s. Formelblätter nach dem letzten Beispiel). Der erfindungsgemäße Kupferphthalocyaninfarbstoff besitzt sehr gute anwendungstechnische Eigenschaften und färbt die in der Beschreibung genannten Materialien, insbesondere Cellulosefasermaterialien, nach den in der Technik für faserreaktive Farbstoffe üblichen Applikations- und Fixierverfahren in farbstarken, grünen bis türkisblauen Farbtönen mit guten Echtheitseigenschaften. Im sichtbaren Bereich zeigt er ein Absorptionsmaximum bei 660 nm.

Beispiel 24

Zur Herstellung eines erfindungsgemäßen Kupferphthalocyaninfarbstoffes verfährt man gemäß der Verfahrensweise des Beispieles 23, setztjedoch anstelle der neutralen Lösung von 4-(β-Sulfatoethylsulfonyl)-anilin die wäßrige Lösung mit der gleichen Menge an 3-(β-Sulfatoethylsulfonyl)-anilin ein und führt darüberhinaus die Umsetzung bei einem pH-Wert von 6,5 und einer Temperatur von 20 bis 25 °C durch.
Der erhaltene Kupferphthalocyaninfarbstoff, dessen Zusammensetzung der, in Form der freien Säure geschrieben, Formel (15) (Formel s. Formelblätter nach dem letzten Beispiel) entspricht, zeigt ebenfalls sehr gute faserreaktive Farbstoffeigenschaften und färbt beispielsweise Baumwolle in farbstarken, grünen bis türkisblauen Tönen mit guten Echtheitseigenschaften. Im sichtbaren Bereich zeigt er ein Absorptionsmaximum bei 660 nm.

Beispiele 25 bis 42

In den nachfolgenden Tabellenbeispielen sind weitere erfindungsgemäße Phthalocyaninfarbstoffe entsprechend der allgemeinen Formel (B) (Formel s. Formelblätter nach dem letzten Beispiel) mit Hilfe von der Formelkomponenten beschrieben. Sie lassen sich in erfindungsgemäßer Weise, beispielsweise nach einem der obigen Ausführungsbeispiele, mittels ihrer aus dem jeweiligen Tabellenbeispiel in Verbindung mit der Formel (B) ersichtlichen Komponenten (so einem sulfonylgruppenhaltigen und gegebenenfalls sulfogruppenhaltigen Kupferphthalocyanin-mono oder -dicarbonsäurechlorid, einer Aminoverbindung entsprechend der in der Beschreibung angegebenen allgemeinen Formel (5) und Ammoniak) herstellen. Sie besitzen faserreaktive Farbstoffeigenschaften und liefern insbesondere auf Cellulosefasermaterialien nach den für faserreaktive Farbstoffe üblichen Applikations- und Fixiermethoden farbstarke, echte Färbungen und Drucke in dem in dem jeweiligen Tabellenbeispiel für Färbungen auf Baumwolle angegebenen Farbton.

| Bsp | Rest $R^A$ | Index A | Index B | Farbton |
|---|---|---|---|---|
| 25 | 2,5-Di-(ß-sulfatoethylsulfonyl)-phenylamino | 1,1 | 1,4 | grün (660) |
| 26 | 2-(ß-Sulfatoethylsulfonyl)-ethylamino | 2,5 | 0,5 | grün (663) |
| 27 | 2-(ß-Chlorethylsulfonyl)-ethylamino | 2,0 | 0,5 | grün (663) |
| 28 | 2-(ß-Sulfatoethylsulfonyl)-phenylamino | 1,0 | 1,5 | grün (663) |
| 29 | 2-Methoxy-5-(ß-sulfatoethylsulfonyl)-phenylamino | 1,1 | 1,4 | grün (664) |
| 30 | 2-Methoxy-4-(ß-sulfatoethylsulfonyl)-phenylamino | 1,2 | 1,3 | grün (664) |
| 31 | N-Ethyl-4-(ß-sulfatoethylsulfonyl)-phenylamino | 1,0 | 1,5 | grün (660) |
| 32 | N-Ethyl-3-(ß-sulfatoethylsulfonyl)-phenylamino | 1,0 | 1,5 | grün (660) |
| 33 | 2-Sulfo-5-(ß-sulfatoethylsulfonyl)-phenylamino | 1,3 | 1,2 | grün (660) |
| 34 | 2-Carboxy-5-(ß-sulfatoethylsulfonyl)-phenylamino | 1,3 | 2,2 | grün (659) |
| 35 | 2-Hydroxy-5-(ß-sulfatoethylsulfonyl)-phenylamino | 1,5 | 1,0 | grün (661) |
| 36 | 2-Hydroxy-4-(ß-sulfatoethylsulfonyl)-phenylamino | 1,5 | 1,0 | grün (661) |
| 37 | 3-(ß-Sulfatoethylsulfonyl)-propylamino | 1,8 | 1,7 | grün (664) |

| Bsp | Rest $R^A$ | Index A | Index B | Farbton |
|---|---|---|---|---|
| 38 | 3-(ß-Chlorethylsulfonyl)-propylamino | 1,8 | 1,7 | grün (664) |
| 39 | ß-[4-(ß'-Sulfatoethylsulfonyl)-phenyl]-ethylamino | 2,0 | 0,5 | grün (662) |
| 40 | ß-[2-Sulfo-5-(ß'-sulfatoethylsulfonyl)-phenyl]-ethylamino | 2,0 | 0,5 | grün (662) |
| 41 | N,N-Bis-[ß-(ß'-chlorethylsulfonyl)-ethyl]-amino | 2,0 | 0,5 | grün (662) |
| 42 | 3,4-Di-(ß-sulfatoethylsulfonyl)-phenylamino | 1,2 | 1,3 | grün (661) |

Beispiel 43

Unter gutem Rühren trägt man 23,2 Teile der chlorsulfonylgruppenhaltigen Kupferphthalocyanin-monocarbonsäurechlorid-Verbindung von Beispiel D bei 20 °C in ein Gemisch aus 100 Teilen Wasser und 7 Teilen Cyanamid ein, gibt danach eine Lösung mit einem pH-Wert von 6,5 von 43 Teilen 4-(β-Suffatoethylsulfonyl)-anilin in 100 Teilen Wasser und danach 5,9 Teile Nikotinsäureamid hinzu und führt die Umsetzung bei einer Temperatur von 20 bis 25 °C und einem pH-Wert von 6 bis 6,5 während etwa sieben Stunden durch.

Der erfindungsgemäße Kupferphthalocyaninfarbstoff, dem, in Form der freien Säure geschrieben, die Formel (16) (Formel s. Formelblätter nach dem letzten Beispiel) zukommt, wird in Form des Alkalimetallsalzes in üblicher Weise aus der Syntheselösung isoliert. Er zeigt im sichtbaren Bereich ein Absorptionsmaximum von 659 nm und besitzt sehr gute faserreaktive Farbstoffeigenschaften. Nach den in der Technik für faserreaktive Farbstoffe üblichen Färbe- und Druckverfahren liefert er farbstarke, grüne bis türkisblaue Färbungen und Drucke mit guten Echtheitseigenschaften.

Beispiel 44

Zur Herstellung eines erfindungsgemäßen Kupferphthalocyaninfarbstoffes verfährt man gemäß der Verfahrensweise des Beispieles 43, setzt jedoch anstelle der neutralen Lösung von 4-(β-Sulfatoethylsulfonyl)-anilin die wäßrige Lösung mit der gleichen Menge an 3-(β-Sulfatoethylsulfonyl)-anilin ein und führt darüberhinaus die Umsetzung bei einem pH-Wert von 6,5 und einer Temperatur von 20 bis 25 °C durch.
Der erhaltene Kupferphthalocyaninfarbstoff, dessen Zusammensetzung der, in Form der freien Säure geschrieben, Formel (17) (Formel s. Formelblätter nach dem letzten Beispiel) entspricht, zeigt ebenfalls sehr gute faserreaktive Farbstoffeigenschaften und färbt beispielsweise Baumwolle in farbstarken, grünen bis türkisblauen Tönen mit guten Echtheitseigenschaften. Im sichtbaren Bereich zeigt er ein Absorptionsmaximum bei 659 nm.

Beispiel 45 bis 62

In den nachfolgenden Tabellenbeispielen sind weitere erfindungsgemäße Phthalocyaninfarbstoffen entsprechend der allgemeinen Formel (C) (Formel s. Formelblätter nach dem letzten Beispiel) mit Hilfe von deren Formelkomponenten beschrieben. Sie lassen sich in erfindungsgemäßer Weise, beispielsweise nach einem der obigen Ausführungsbeispiele, mittels ihrer aus dem jeweiligen Tabellenbeispiel in Verbindung mit der Formel (C) ersichtlichen Komponenten (so einem sulfonylgruppenhaltigen und gegebenenfalls sulfogruppenhaltigen Kupferphthalocyanin-mono- oder -dicarbonsäurechlorid, einer Aminoverbindung entsprechend der in der Beschreibung angegebenen allgemeinen Formel (5) und Cyanamid) herstellen. Sie besitzen faserreaktive Farbstoffeigenschaften und liefern insbesondere auf Cellulosefasermaterialien nach den für faserreaktive Farbstoffe üblichen Applikations- und Fixiermethoden farbstarke, echte Färbungen und Drucke in dem in dem jeweiligen Tabellenbeispiel für Färbungen auf Baumwolle angegebenen Farbton.

| Bsp | Rest $R^A$ | Index A | Index B | Farbton |
|---|---|---|---|---|
| 45 | 2,5-Di-(ß-sulfatoethylsulfonyl)-phenylamino | 1,3 | 1,2 | grün (660) |
| 46 | 2-(ß-Sulfatoethylsulfonyl)-ethylamino | 2 | 0,5 | grün (662) |
| 47 | 2-(ß-Chlorethylsulfonyl)-ethylamino | 1,7 | 0,8 | grün (662) |
| 48 | 2-(ß-Sulfatoethylsulfonyl)-phenylamino | 1,0 | 1,5 | grün (663) |
| 49 | 2-Methoxy-5-(ß-sulfatoethylsulfonyl)-phenylamino | 1,1 | 1,4 | grün (663) |
| 50 | 2-Methoxy-4-(ß-sulfatoethylsulfonyl)-phenylamino | 1,3 | 1,2 | grün (664) |
| 51 | N-Ethyl-4-(ß-sulfatoethylsulfonyl)-phenylamino | 1,0 | 1,5 | grün (665) |
| 52 | N-Ethyl-3-(ß-sulfatoethylsulfonyl)-phenylamino | 1,0 | 1,5 | grün (665) |
| 53 | 2-Sulfo-5-(ß-sulfatoethylsulfonyl)-phenylamino | 1,3 | 1,2 | grün (660) |
| 54 | 2-Carboxy-5-(ß-sulfatoethylsulfonyl)-phenylamino | 1,2 | 1,3 | grün (660) |
| 55 | 2-Hydroxy-5-(ß-sulfatoethylsulfonyl)-phenylamino | 1,5 | 1,0 | grün (660) |
| 56 | 2-Hydroxy-4-(ß-sulfatoethylsulfonyl)-phenylamino | 1,6 | 0,9 | grün (660) |
| 57 | 3-(ß-Sulfatoethylsulfonyl)-propylamino | 2,0 | 0,5 | grün (662) |

| Bsp | Rest $R^A$ | Index A | Index B | Farbton |
|---|---|---|---|---|
| 58 | 3-(ß-Chlorethylsulfonyl)-propylamino | 1,5 | 1,0 | grün (662) |
| 59 | ß-[4-(ß'-Sulfatoethylsulfonyl)-phenyl]-ethylamino | 2,0 | 0,5 | grün (660) |
| 60 | ß-[2-Sulfo-5-(ß'-sulfatoethylsulfonyl)-phenyl]-ethylamino | 2,0 | 0,5 | grün (659) |
| 61 | N,N-Bis-[ß-(ß'-chlorethylsulfonyl)-ethyl]-amino | 1,5 | 1,5 | grün (661) |
| 62 | 3,4-Di-(ß-sulfatoethylsulfonyl)-phenylamino | 1,3 | 1,2 | grün (660) |

Beispiel 63

In einer Lösung mit einem pH-Wert von 6,5 von 43 Teilen 4-(β-Sufatoethylsulfonyl)-anilin in 100 Teilen Wasser rührt man 23,2 Teile der chlorsulfonylgruppenhaltigen Nickelphthalocyaninmonocarbonsäurechlorid-Verbindung von Beispiel F in Form des feuchten Filterkuchens ein, gibt sodann 5,9 Teile Nicotinsäureamid hinzu und führt die Umsetzung bei 20 bis 25 ° C und einem pH-Wert von 6 bis 6,5 während etwa sieben Stunden durch.

Aus der erhaltenen Syntheselösung wird der erfindungsgemäße Nickelphthalocyaninfarbstoff, dessen Zusammensetzung der, in Form der freien Säure geschrieben, Formel (18) (Formel s. Formelblätter nach dem letzten Beispiel) in Form des Alkalimetallsalzes (Natriumsalzes) in üblicher Weise isoliert. Er zeigt im sichtbaren Bereich ein Absorptionsmaximum bei 656 nm und besitzt sehr gute faserreaktive Farbstoffeigenschaften. Nach dem in der Technik üblichen Färbeweisen für faserreaktive Farbstoffe liefert er auf den in der Beschreibung genannten Materialien wie beispielsweise Baumwolle, grüne Färbungen mit guten Echtheitseigenschaften und in guter Farbausbeute.

Beispiel 64

Zur Herstellung eines erfindungsgemäßen Kupferphthalocyaninfarbstoffes verfährt man gemäß der Verfahrensweise des Beispieles 63, setztjedoch anstelle der neutralen Lösung von 4-(β-Sulfatoethylsulfonyl)-anilin die waßrige Lösung mit der gleichen Menge an 3-(β-Sulfatoethylsulfonyl)-anilin ein und führt darüberhinaus die Umsetzung bei einem pH-Wert von 6,5 und einer Temperatur von 20 bis 25 ° C durch.
Der erhaltene Kupferphthalocyaninfarbstoff, dessen Zusammensetzung der, in Form der freien Säure geschrieben, Formel (19) (Formel, s. Formelblätter nach dem letzten Beispiel) entspricht, zeigt ebenfalls sehr gute faserreaktive Farbstoffeigenschaften und färbt beispielsweise Baumwolle in farbstarken, grünen bis türkisblauen Tönen mit guten Echtheitseigenschaften. Im sichtbaren Bereich zeigt er ein Absorptionsmaximum bei 656 nm.

Beispiele 65 bis 82

In den nachfolgenden Tabellenbeispielen sind weitere erfindungsgemäße Nickelphthalocyaninfarbstoffe entsprechend der allgemeinen Formel (D) (Formel s. Formelblätter nach dem letzten Beispiel) mit Hilfe von deren Formelkomponenten beschrieben. Sie lassen sich in erfindungsgemäßer Weise, beispielsweise nach einem der obigen Ausführungsbeispiele, mittels ihrer aus dem jeweiligen Tabellenbeispiel in Verbindung mit der Formel (D) ersichtlichen Komponenten (so einem sulfonylgruppenhaltigen und gegebenenfalls sulfo-

gruppenhaltigen NIckelphthalocyanin-mono- oder -dicarbonsäurechlorid und einer Aminoverbindung entsprechend der in der Beschreibung angegebenen allgemeinen Formel (5)) herstellen. Sie besitzen faserreaktive Farbstoffeigenschaften und liefern insbesondere auf Cellulosefasermaterialien nach den für faserreaktive Farbstoffe üblichen Applikations- und Fixiermethoden farbstarke, echte Färbungen und Drucke in dem in dem jeweiligen Tabellenbeispiel für Färbungen auf Baumwolle angegebenen Farbton.

| Bsp | Rest $R^A$ | Index A | Index B | Farbton |
|---|---|---|---|---|
| 65 | 2,5-Di-(ß-sulfatoethylsulfonyl)-phenylamino | 1,2 | 2,3 | grün (658) |
| 66 | 2-(ß-Sulfatoethylsulfonyl)-ethylamino | 2,0 | 1,5 | grün (661) |
| 67 | 2-(ß-Chlorethylsulfonyl)-ethylamino | 2,0 | 1,5 | grün (661) |
| 68 | 2-(ß-Sulfatoethylsulfonyl)-phenylamino | 1,1 | 2,4 | grün (658) |
| 69 | 2-Methoxy-5-(ß-sulfatoethylsulfonyl)-phenylamino | 1,3 | 2,2 | grün (659) |
| 70 | 2-Methoxy-4-(ß-sulfatoethylsulfonyl)-phenylamino | 1,3 | 2,2 | grün (659) |
| 71 | N-Ethyl-4-(ß-sulfatoethylsulfonyl)-phenylamino | 1,0 | 2,5 | grün (659) |
| 72 | N-Ethyl-3-(ß-sulfatoethylsulfonyl)-phenylamino | 1,1 | 2,4 | grün (659) |
| 73 | 2-Sulfo-5-(ß-sulfatoethylsulfonyl)-phenylamino | 1,4 | 2,1 | grün (657) |
| 74 | 2-Carboxy-5-(ß-sulfatoethylsulfonyl)-phenylamino | 1,3 | 2,2 | grün (656) |
| 75 | 2-Hydroxy-5-(ß-sulfatoethylsulfonyl)-phenylamino | 1,2 | 1,8 | grün (658) |
| 76 | 2-Hydroxy-4-(ß-sulfatoethylsulfonyl)-phenylamino | 1,8 | 1,7 | grün (658) |
| 77 | 3-(ß-Sulfatoethylsulfonyl)-propylamino | 2,0 | 1,5 | grün (659) |

| Bsp | Rest $R^A$ | Index A | Index B | Farbton |
|---|---|---|---|---|
| 78 | 3-(ß-Chlorethylsulfonyl)-propylamino | 2,1 | 1,4 | grün (659) |
| 79 | ß-[4-(ß'-Sulfatoethylsulfonyl)-phenyl]-ethylamino | 2,0 | 1,5 | grün (659) |
| 80 | ß-[2-Sulfo-5-(ß'-sulfatoethylsulfonyl)-phenyl]-ethylamino | 2,0 | 1,5 | grün (659) |
| 81 | N,N-Bis-[ß-(ß'-chlorethylsulfonyl)-ethyl]-amino | 1,9 | 1,6 | grün (660) |
| 82 | 3,4-Di-(ß-sulfatoethylsulfonyl)-phenylamino | 1,2 | 2,3 | grün (658) |

Beispiel 83

In eine neutrale Lösung von 43 Teilen 4-(β-Sulfatoethylsulfonyl)-anilin in 100 Teilen Wasser rührt man 23,2 Teile Kupferphthalocyanintetracarbonsäurechlorid in Form eines feuchten Filterkuchens ein. Die Reaktion setzt langsam ein, und man führt die Umsetzung bei einem pH-Wert von 6 bis 6,5 und einer Temperatur von 20 bis 25 ° C während etwa sieben Stunden durch. Die erfindungsgemäße Kupferphthalocyaninverbindung, die, in Form der freien Säure geschrieben, der Formel (20) (Formel s. Formelblätter nach dem letzten Beispiel) entspricht, wird als Alkalimetallsalz (Natriumsalz) in üblicher Weise, beispielsweise durch Sprühtrocknung, aus der Syntheselösung isoliert. Sie zeigt in sichtbaren Bereich ein Absorptionsmaximum bei 680 nm und besitzt sehr gute faserreaktive Farbstoffeigenschaften. Nach den für faserreaktive Farbstoffe üblichen Färbeweisen erhält man farbstarke grüne bis türkisblaue Färbungen und Drucke mit guten Echtheitseigenschaften auf den in der Beschreibung genannten Fasermaterialien, wie beispielsweise Baumwolle.

Beispiel 84

Zur Herstellung einer erfindungsgemäßen Kupferphthalocyaninverbindung verfährt man gemäß der Verfahrensweise des Beispieles 83 mit dem Unterschied, daß anstelle der Ausgangsverbindung 4-(β-Sulfatoethylsulfonyl)-anilin die gleiche Menge an 3-(β-Sulfatoethylsulfonyl)anilin eingesetzt wird. Man erhält den erfindungsgemäßen Kupferphthalocyaninfarbstoff der, in Form der freien Säure geschrieben, Formel (21) (Formel s. Formelblätter nach dem letzten Beispiel), der gleich gute Farbstoffeigenschaften besitzt wie der Farbstoff des Beispieles 83 und im sichtbaren Bereich ein Absorptionsmaximum bei 680 nm zeigt.

Beispiele 85 bis 102

In den nachfolgenden Tabellenbeispielen sind weitere erfindungsgemäße Kupferphthalocyaninfarbstoffe entsprechend der allgemeinen Formelm (E) (Formel s. Formelblätter nach dem letzten Beispiel) mit Hilfe von deren Formelkomponenten beschrieben. Sie lassen sich in erfindungsgemäßer Weise, beispielsweise nach einem der obigen Ausführungsbeispiele, mittels ihrer aus dem jeweiligen Tabellenbeispiel in Verbindung mit der Formel (E) ersichtlichen Komponenten (so einem Kupferphthalocyanin-carbonsäurechlorid und einer Aminoverbindung entsprechend der in der Beschreibung angegeben allgemeinen Formel (5)) herstellen. Sie besitzen faserreaktive Farbstoffeigenschaften und liefern insbesondere auf Cellulosefasermaterialien nach den für faserreaktive Farbstoffe üblichen Applikations- und Fixiermethoden farbstarke, echte Färbungen und Drucke in dem in dem jeweiligen Tabellenbeispiel für Färbungen auf Baumwolle angegebenen

Farbton.

| Bsp | Rest $R^A$ | Index A | Index B | Farbton |
|---|---|---|---|---|
| 85 | 3,4-Di-(ß-sulfatoethylsulfonyl)-phenylamino | 1,0 | 3,0 | grün (680) |
| 86 | 2,5-Di-(ß-sulfatoethylsulfonyl)-phenylamino | 1,0 | 3,0 | grün (680) |
| 87 | 2-(ß-Sulfatoethylsulfonyl)-ethylamino | 1,5 | 2,5 | grün (682) |
| 88 | 2-(ß-Chlorethylsulfonyl)-ethylamino | 1,5 | 2,5 | grün (682) |
| 89 | 2-(ß-Sulfatoethylsulfonyl)-phenylamino | 1,0 | 3,0 | grün (680) |
| 90 | 2-Methoxy-5-(ß-sulfatoethylsulfonyl)-phenylamino | 1,1 | 2,9 | grün (682) |
| 91 | 2-Methoxy-4-(ß-sulfatoethylsulfonyl)-phenylamino | 1,1 | 2,9 | grün (682) |
| 92 | N-Ethyl-4-(ß-sulfatoethylsulfonyl)-phenylamino | 1,0 | 3,0 | grün (680) |
| 93 | N-Ethyl-3-(ß-sulfatoethylsulfonyl)-phenylamino | 1,0 | 3,0 | grün (680) |
| 94 | 2-Sulfo-5-(ß-sulfatoethylsulfonyl)-phenylamino | 1,0 | 3,0 | grün (682) |
| 95 | 2-Carboxy-5-(ß-sulfatoethylsulfonyl)-phenylamino | 1,0 | 3,0 | grün (682) |
| 96 | 2-Hydroxy-5-(ß-sulfatoethylsulfonyl)-phenylamino | 1,2 | 2,7 | grün (683) |
| 97 | 2-Hydroxy-4-(ß-sulfatoethylsulfonyl)-phenylamino | 1,2 | 2,7 | grün (683) |

| Bsp | Rest $R^A$ | Index A | Index B | Farbton |
|---|---|---|---|---|
| 98 | 3-(ß-Sulfatoethylsulfonyl)-propylamino | 1,5 | 2,5 | grün (683) |
| 99 | 3-(ß-Chlorethylsulfonyl)-propylamino | 1,5 | 2,5 | grün (683) |
| 100 | ß-[4-(ß'-Sulfatoethylsulfonyl)-phenyl]-ethylamino | 1,5 | 2,5 | grün (682) |
| 101 | ß-[2-Sulfo-5-(ß'-sulfatoethylsulfonyl)-phenyl]-ethylamino | 1,5 | 2,5 | grün (682) |
| 102 | N,N-Bis-[ß-(ß'-chlorethylsulfonyl)-ethyl]-amino | 1,5 | 2,5 | grün (682) |

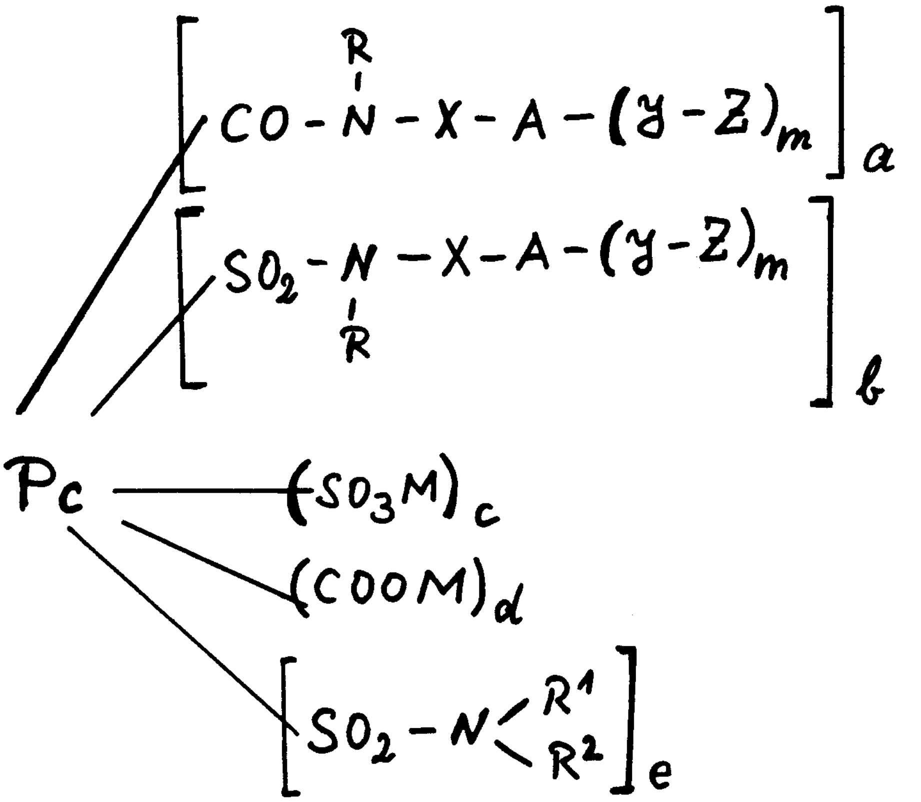

(1)

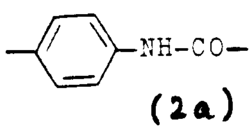

(2a)

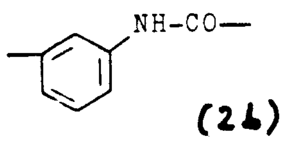

(2b)

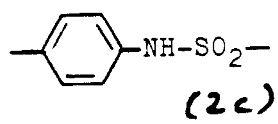

(2c)

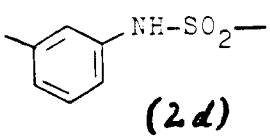

(2d)

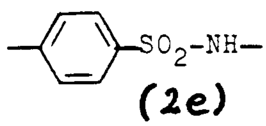

(2e)

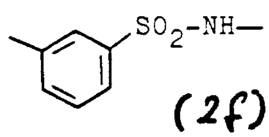

(2f)

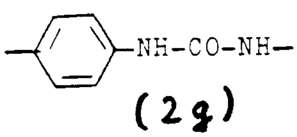

(2g)

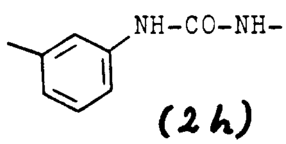

(2h)

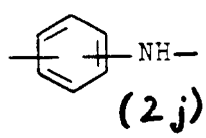

(2j)

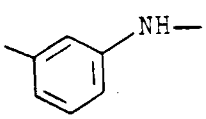

(2k)

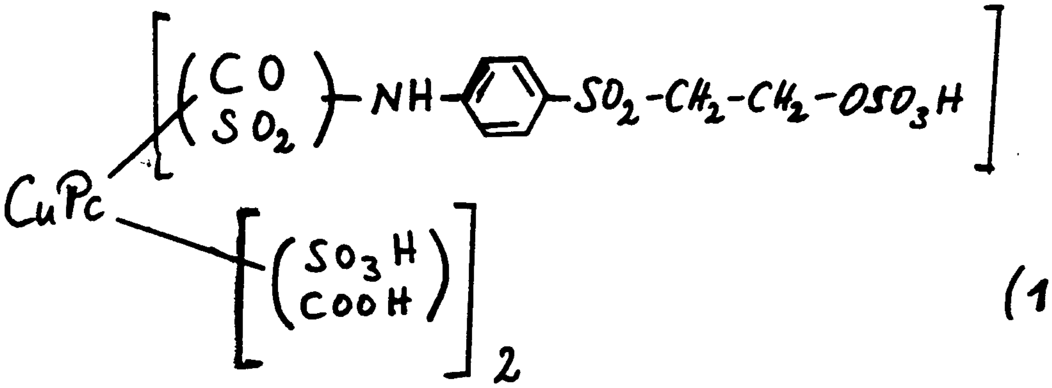

(10)

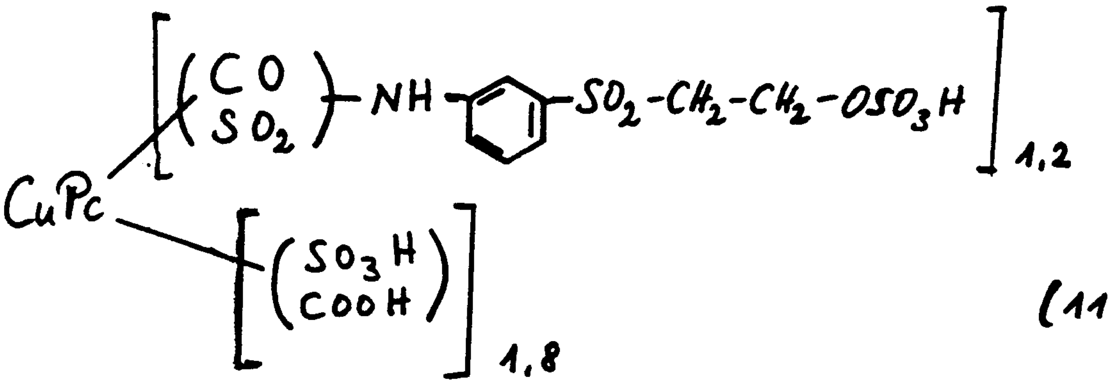

(11)

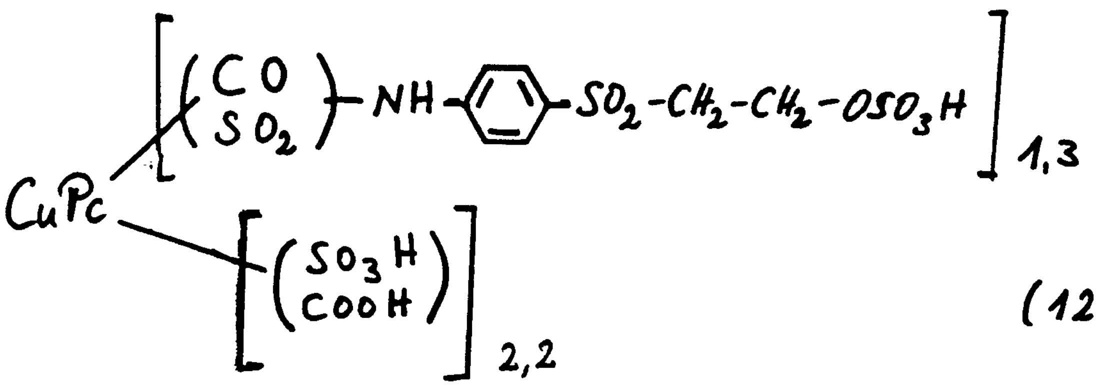

(12)

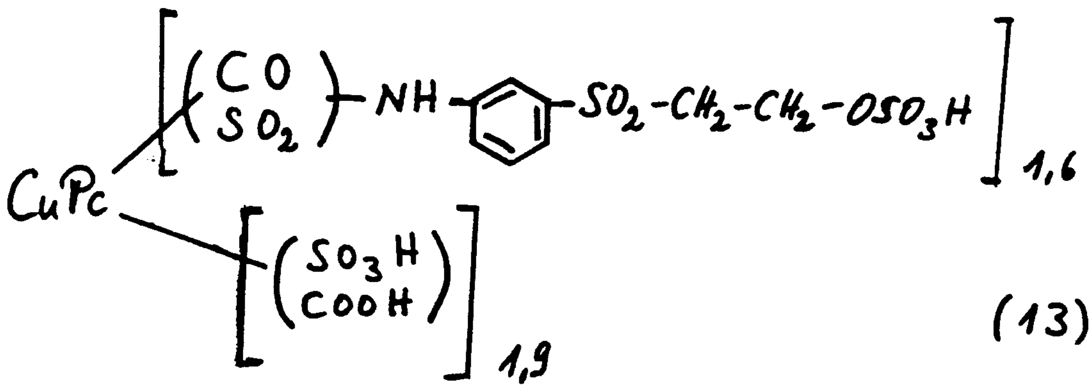

(13)

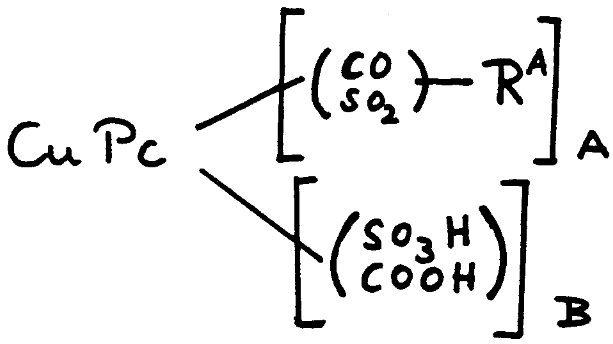

(A)

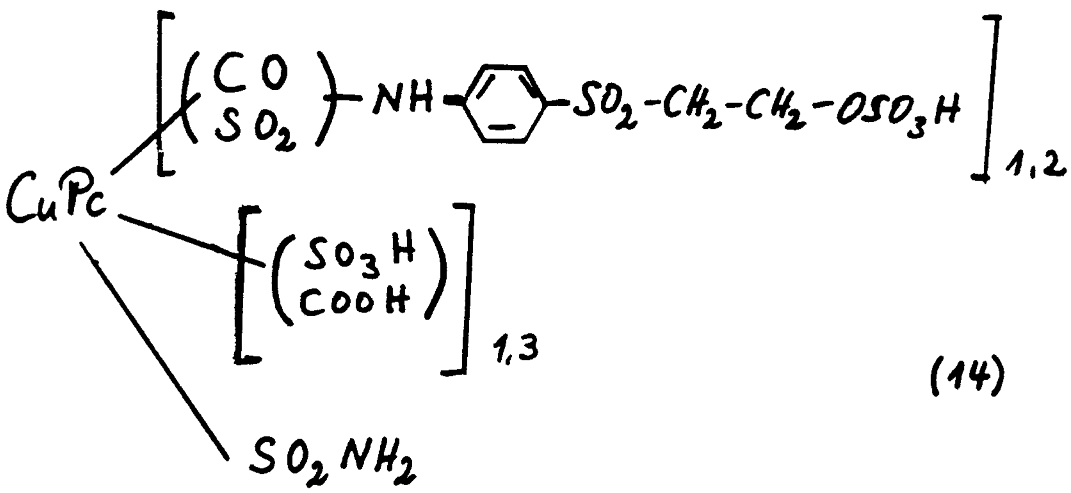

(14)

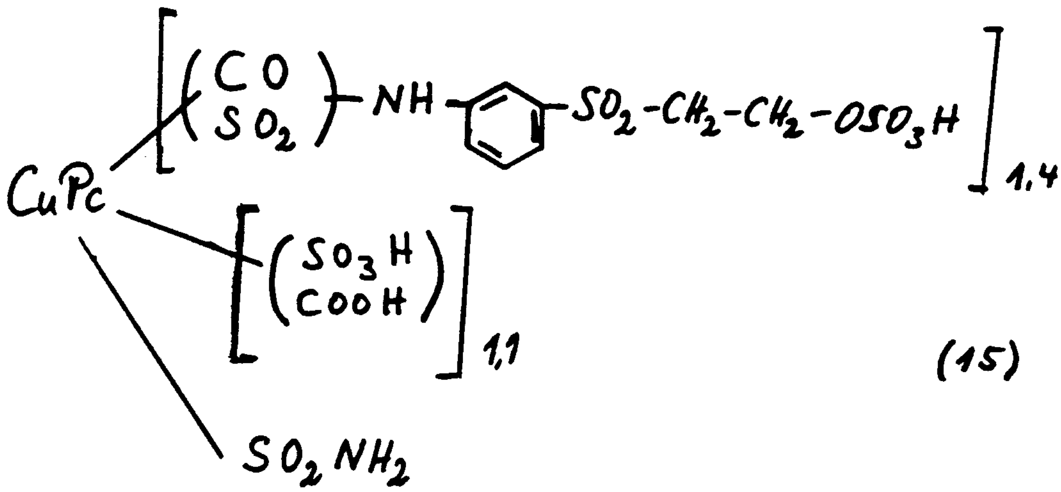

(15)

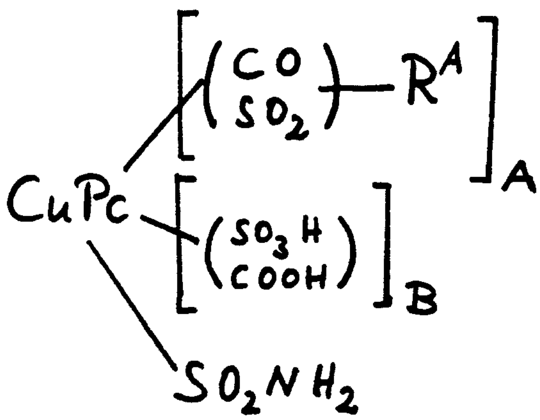

(B)

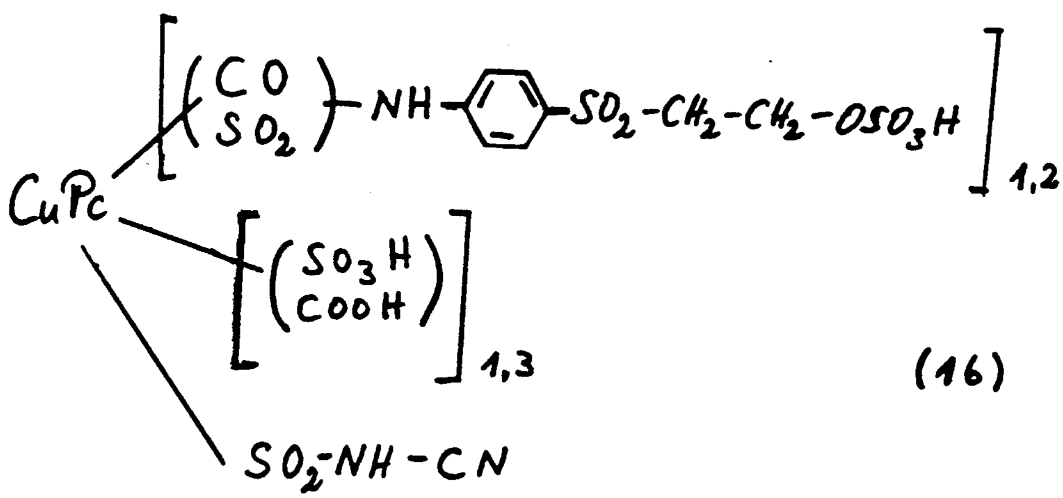

(16)

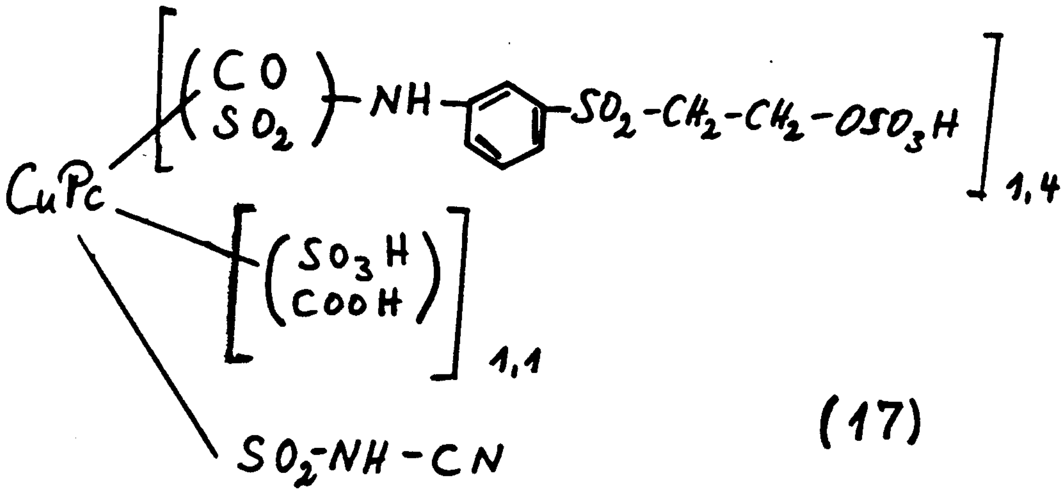

(17)

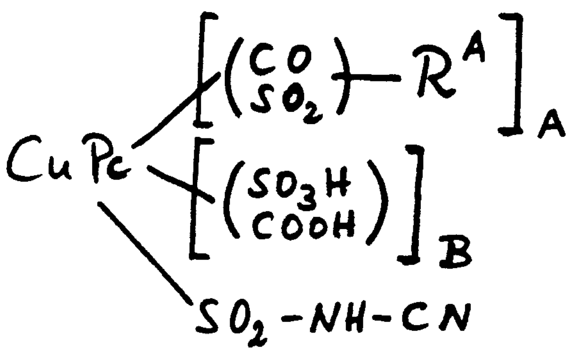

(C)

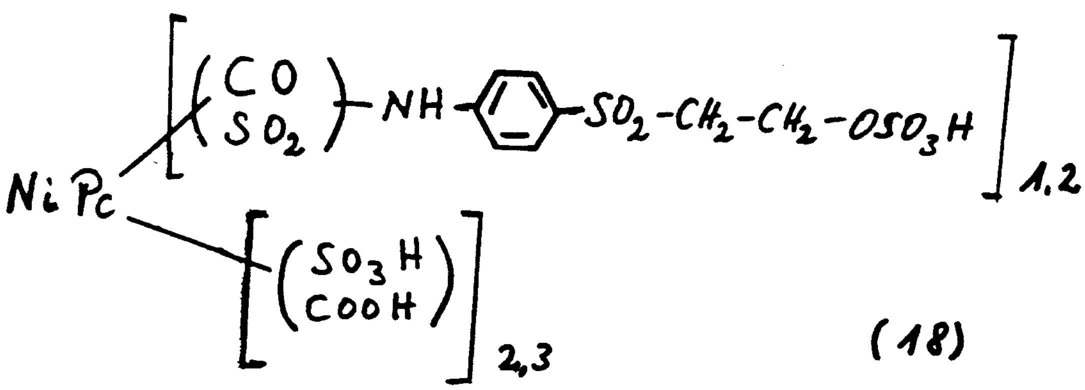

(18)

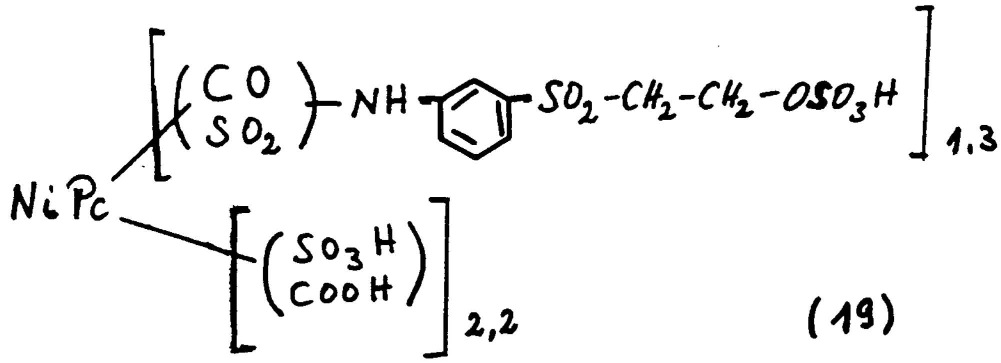

(19)

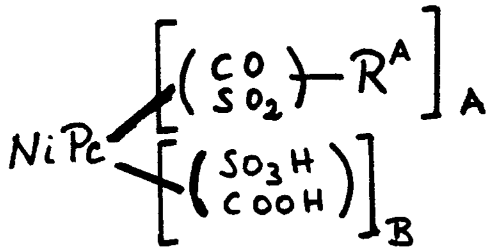

(D)

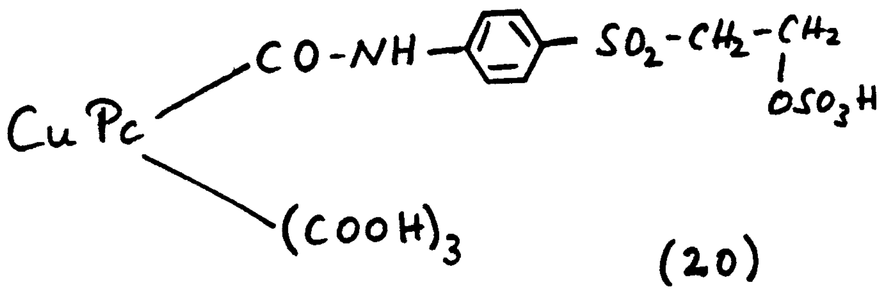

(20)

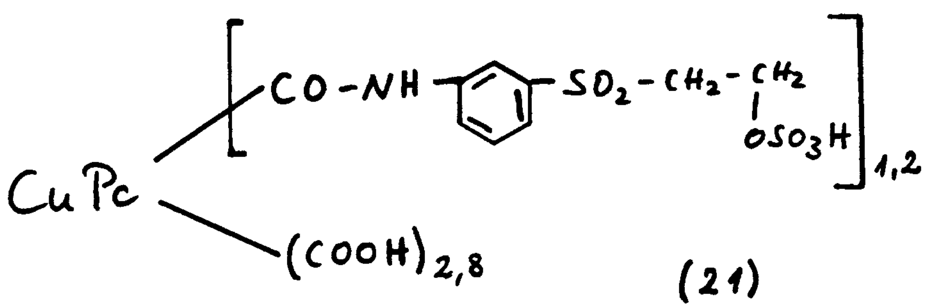

(21)

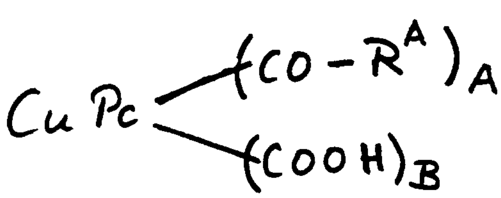

(E)

## Patentansprüche

1. Wasserlösliche Phthalocyaninfarbstoffe der in der Beschreibung auf Formelblättern angegebenen allgemeinen Formel (1), in welcher bedeuten:

Pc ist der Rest des metallfreien oder eines metallhaltigen Phthalocyanins, beispielsweise Kupfer-, Kobalt- oder Nickelphthalocyanins, wobei der Phthalocyaninrest noch in den 3- und/oder 4-Stellungen der carbocyclischen aromatischen Ringe des Phthalocyanins substituiert sein kann, und in welchem die Sulfochlorid-, Sulfonamid- und/oder Sulfogruppen in den 3- und/oder 4-Stellungen der carbocyclischen aromatischen Ringe des Phthalocyanins gebunden sind;

R ist ein Wasserstoffatom oder ein niederer aliphatischer Rest, insbesondere eine niedere Alkylgruppe, der substituiert sein kann;

$R^1$ ist ein Wasserstoffatom oder ein niederer Alkylrest, der substituiert sein kann, oder ein Cycloalkylrest von 5 bis 8 C-Atomen, und

$R^2$ ist ein Wasserstoffatom oder eine niedere Alkylgruppe, die substituiert sein kann, oder ein Arylrest, der substituiert sein kann, oder die Cyanogruppe, oder

$R^1$ und $R^2$ bilden gemeinsam mit dem Stickstoffatom und einem Alkylenrest von 3 bis 8 C-Atomen oder mit einem weiteren Heteroatom und zwei niederen Alkylenresten den Rest eines 4- bis 8-gliedrigen heterocyclischen Rings;

A ist ein aromatischer carbocyclischer oder aromatischer heterocyclischer Rest, bevorzugt ein gegebenenfalls subtituierter Phenylen- oder Naphthylenrest, oder ist ein Alkylenrest von 1 bis 8 C-Atomen, bevorzugt von 2 bis 6 C-Atomen, oder ein Alkylenrest von 2 bis 8 C-Atomen, der durch 1 oder 2 Heterogruppen unterbrochen sein kann;

X ist eine direkte Bindung oder ein zweiwertiges organisches Bindeglied oder

X bildet zusammen mit der Gruppe -N(R)- einen Rest der allgemeinen Formel (3)

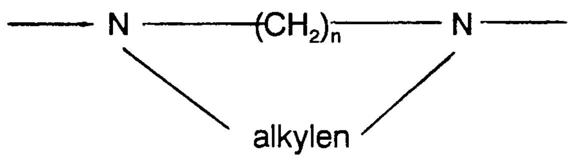

(3)

in welcher

n die obengenannte Bedeutung hat und alkylen einen Alkylenrest von 1 bis 6 C-Atomen darstellt;

Y ist eine direkte Bindung oder eine Gruppe der Formel -CO-NH-alkylen- mit alkylen der obigen Bedeutung,

$-CH_2-$, $-CH_2-CH_2-$,

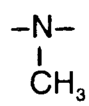

oder

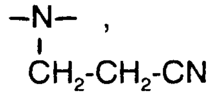

oder

Y ist ein Alkylenrest von 2 bis 6 C-Atomen, wobei in diesem Falle die Gruppierung -X-A- zusammen zwingend eine direkte Bindung und m gleich 2 ist;

Z ist die Vinylsulfonylgruppe oder ist eine Ethylsulfonylgruppe, die in $\beta$-Stellung einen alkalisch eliminierbaren Substituenten enthält;

a ist eine ganze Zahl von Null bis 4, bevorzugt Null, 1 oder 2;

b ist eine ganze Zahl von Null bis 3;

c ist eine ganze Zahl von Null bis 3;

d ist eine ganze Zahl von Null bis 3;
e ist eine ganze Zahl von Null bis 2;
die Summe von (a + b + c + d + e) ist höchstens 4;
die Summe von (a + b) ist 1 bis 4, bevorzugt 1,2 oder 3;
die Summe von (a + d) ist 1 bis 4;
die Summe von (c + d) ist Null bis 4;
m ist die Zahl 1 oder 2, bevorzugt 1;
M ist ein Wasserstoffatom oder ein Alkalimetall oder ein anderes salzbildendes Metall.

2. Phthalocyaninfarbstoff nach Anspruch 1, dadurch gekennzeichnet, daß X eine direkte Bindung ist.

3. Phthalocyaninfarbstoff nach Anspruch 1 oder 2, dadurch gekennzeichnet, daß Y eine direkte Bindung ist.

4. Phthalocyaninfarbstoff nach einem oder mehreren der Ansprüche 1 bis 3, dadurch gekennzeichnet, daß m die Zahl 1 bedeutet.

5. Phthalocyaninfarbstoff nach mindestens einem der Ansprüche 1 bis 4, dadurch gekennzeichnet, daß b, c und e jeweils die Zahl Null bedeuten.

6. Phthalocyaninfarbstoff nach mindestens einem der Ansprüche 1 bis 5, dadurch gekennzeichnet, daß A den meta- oder para-Phenylenrest bedeutet.

7. Phthalocyaninfarbstoff nach mindestens einem der Ansprüche 1 bis 6, dadurch gekennzeichnet, daß Z die $\beta$-Sulfatoethylsulfonyl-Gruppe bedeutet.

8. Phthalocyaninfarbstoff nach Anspruch 1, dadurch gekennzeichnet, daß e die Zahl Null bedeutet.

9. Phthalocyaninfarbstoff nach Anspruch 1, dadurch gekennzeichnet, daß $R^2$ und $R^3$ beide für Wasserstoff stehen.

10. Verfahren zur Herstellung einer Phthalocyaninverbindung der allgemeinen Formel (1), dadurch gekennzeichnet, daß man ein Phthalocyaninsäurechlorid der allgemeinen Formel (4)

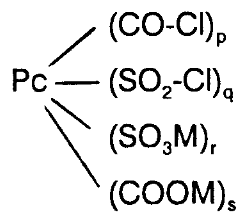

(4)

in welcher
Pc und M die in Anspruch 1 genannten Bedeutungen haben,
p eine ganze Zahl von 1 bis 4 bedeutet,
q eine ganze Zahl von Null bis 3 ist,
r eine ganze Zahl von Null bis 3 ist und
s eine ganze Zahl von Null bis 3 bedeutet,
wobei die Summe von (p + q + r + s) eine ganze Zahl von 1 bis 4 ist,
die Summe von (p + q) eine Zahl von 1 bis 4 und
die Summe von (r + s) eine Zahl von Null bis 3 ist,
oder eine Mischung der Verbindungen der allgemeinen Formel (4) in einem wäßrigen oder wäßrigorganischen Medium gleichzeitig oder in beliebiger Reihenfolge mit einem Amin der allgemeinen Formel (5)

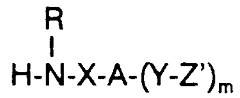

(5)

in welcher R, X, A, Y und m die obengenannten Bedeutungen haben und Z' eine derfür Z genannten Bedeutungen besitzt oder die βHydroxyethylsulfonyl-Gruppe ist, und gegebenenfalls mit einem weiteren Amin der allgemeinen Formel (6)

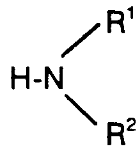

(6)

in welcher $R^1$ und $R^2$ die obengenannten Bedeutungen haben, umsetzt und im Falle, daß Z' für die β-Hydroxyethylsulfonyl-Gruppe steht, die erhaltene β-hydroxyethylsulfonylgruppenhaltige Phthalocyaninverbindung in einen Phthalocyaninfarbstoff der Formel (1) mit einem Rest Z überführt.

**11.** Verwendung eines Phthalocyaninfarbstoffes von mindestens einem der Ansprüche 1 bis 9 oder eines nach Anspruch 10 hergestellten Phthalocyaninfarbstoffes zum Farben und Bedrucken von hydroxy- und/oder carbonamidgruppenhaltigem Material, insbesondere Fasermaterial.

**12.** Verfahren zum Farben und Bedrucken von hydroxy- und/oder carbonamidgruppenhaltigem Material, vorzugsweise Fasermaterial, bei welchem man einen Farbstoff auf das Material aufbringt und den Farbstoff auf dem Material mittels Wärme oder mit Hilfe eines alkalisch wirkenden Mittels oder mittels Wärme und mit Hilfe eines alkalisch wirkenden Mittels fixiert, dadurch gekennzeichnet, daß man als Farbstoff einen Phthalocyaninfarbstoff von mindestens einem der Ansprüche 1 bis 9 oder einen nach Anspruch 10 hergestellten Phthalocyaninfarbstoff verwendet.

**Patentansprüche für folgenden Vertragsstaat : ES**

**1.** Verfahren zur Herstellung von wasserlöslichen Phthalocyaninfarbstoffen der in der Beschreibung auf Formelblättern angegebenen allgemeinen Formel (1), in welcher bedeuten:

| | |
|---|---|
| Pc | ist der Rest des metallfreien oder eines metallhaltigen Phthalocyanins, beispielsweise Kupfer-, Kobalt- oder Nickelphthalocyanins, wobei der Phthalocyaninrest noch in den 3- und/oder 4-Stellungen der carbocyclischen aromatischen Ringe des Phthalocyanins substituiert sein kann, und in welchem die Sulfochlorid-, Sulfonamid- und/oder Sulfogruppen in den 3- und/oder 4-Stellungen der carbocyclischen aromatischen Ringe des Phthalocyanins gebunden sind; |
| R | ist ein Wasserstoffatom oder ein niederer aliphatischer Rest, insbesondere eine niedere Alkylgruppe, der substituiert sein kann; |
| $R^1$ | ist ein Wasserstoffatom oder ein niederer Alkylrest, der substituiert sein kann, oder ein Cycloalkylrest von 5 bis 8 C-Atomen, und |
| $R^2$ | ist ein Wasserstoffatom oder eine niedere Alkylgruppe, die substituiert sein kann, oder ein Arylrest, der substituiert sein kann, oder die Cyanogruppe, oder |
| $R^1$ und $R^2$ | bilden gemeinsam mit dem Stickstoffatom und einem Alkylenrest von 3 bis 8 C-Atomen oder mit einem weiteren Heteroatom und zwei niederen Alkylenresten den Rest eines 4- bis 8-gliedrigen heterocyclischen Rings; |
| A | ist ein aromatischer carbocyclischer oder aromatischer heterocyclischer Rest, bevorzugt ein gegebenenfalls subtituierter Phenylen- oder Naphthylenrest, oder ist ein Alkylenrest von 1 bis 8 C-Atomen, bevorzugt von 2 bis 6 C-Atomen, oder ein Alkylenrest von 2 bis 8 C-Atomen, der durch 1 oder 2 Heterogruppen unterbrochen sein kann; |
| X | ist eine direkte Bindung oder ein zweiwertiges organisches Bindeglied oder |
| X | bildet zusammen mit der Gruppe -N(R)- einen Rest der allgemeinen Formel (3) |

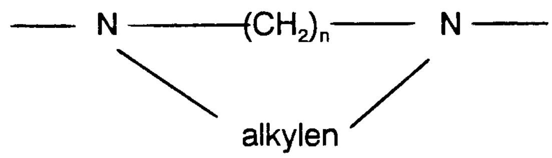 (3)

in welcher

n die obengenannte Bedeutung hat und alkylen einen Alkylenrest von 1 bis 6 C-Atomen darstellt;

Y ist eine direkte Bindung oder eine Gruppe der Formel -CO-NH-alkylen- mit alkylen der obigen Bedeutung,

$-CH_2-$, $-CH_2-CH_2-$,

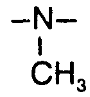

oder

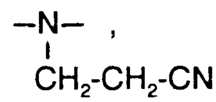 ,

oder

Y ist ein Alkylenrest von 2 bis 6 C-Atomen, wobei in diesem Falle die Gruppierung -X-A- zusammen zwingend eine direkte Bindung und m gleich 2 ist;

Z ist die Vinylsulfonylgruppe oder ist eine Ethylsulfonylgruppe, die in β-Stellung einen alkalisch eliminierbaren Substituenten enthält;

a ist eine ganze Zahl von Null bis 4, bevorzugt Null, 1 oder 2;

b ist eine ganze Zahl von Null bis 3;

c ist eine ganze Zahl von Null bis 3;

d ist eine ganze Zahl von Null bis 3;

e ist eine ganze Zahl von Null bis 2;

die Summe von (a + b + c + d + e) ist höchstens 4;

die Summe von (a + b) ist 1 bis 4, bevorzugt 1,2 oder 3;

die Summe von (a + d) ist 1 bis 4;

die Summe von (c + d) ist Null bis 4;

m ist die Zahl 1 oder 2, bevorzugt 1;

M ist ein Wasserstoffatom oder ein Alkalimetall oder ein anderes salzbildendes Metall;

dadurch gekennzeichnet, daß man ein Phthalocyaninsäurechlorid der allgemeinen Formel (4)

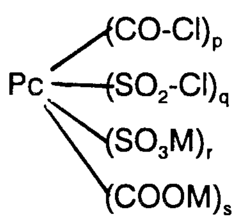 (4)

in welcher

Pc und M die oben genannten Bedeutungen haben,

p eine ganze Zahl von 1 bis 4 bedeutet,

q eine ganze Zahl von Null bis 3 ist,
r eine ganze Zahl von Null bis 3 ist und
s eine ganze Zahl von Null bis 3 bedeutet,

wobei die Summe von (p + q + r + s) eine ganze Zahl von 1 bis 4 ist, die Summe von (p + q) eine Zahl von 1 bis 4 und die Summe von (r + s) eine Zahl von Null bis 3 ist, oder eine Mischung der Verbindungen der allgemeinen Formel (4) in einem wäßrigen oder wäßrigorganischen Medium gleichzeitig oder in beliebiger Reihenfolge mit einem Amin der allgemeinen Formel (5)

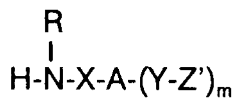 (5)

in welcher R, X, A, Y und m die obengenannten Bedeutungen haben und Z' eine der für Z genannten Bedeutungen besitzt oder die $\beta$-Hydroxyethylsulfonyl-Gruppe ist, und gegebenenfalls mit einem weiteren Amin der allgemeinen Formel (6)

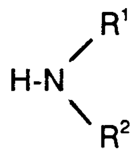 (6)

in welcher $R^1$ und $R^2$ die obengenannten Bedeutungen haben, umsetzt und im Falle, daß Z' für die $\beta$-Hydroxyethylsulfonyl-Gruppe steht, die erhaltene $\beta$-hydroxyethylsulfonylgruppenhaltige Phthalocyaninverbindung in einen Phthalocyaninfarbstoff der Formel (1) mit einem Rest Z überführt.

**2.** Verfahren nach Anspruch 1, dadurch gekennzeichnet, daß X eine direkte Bindung ist.

**3.** Verfahren nach Anspruch 1 oder 2, dadurch gekennzeichnet, daß Y eine direkte Bindung ist.

**4.** Verfahren nach einem oder mehreren der Ansprüche 1 bis 3, dadurch gekennzeichnet, daß m die Zahl 1 bedeutet.

**5.** Verfahren nach mindestens einem der Ansprüche 1 bis 4, dadurch gekennzeichnet, daß b, c und e jeweils die Zahl Null bedeuten.

**6.** Verfahren nach mindestens einem der Ansprüche 1 bis 5, dadurch gekennzeichnet, daß A den meta- oder para-Phenylenrest bedeutet.

**7.** Verfahren nach mindestens einem der Ansprüche 1 bis 6, dadurch gekennzeichnet, daß Z die $\beta$-Sulfatoethylsulfonyl-Gruppe bedeutet.

**8.** Verfahren nach Anspruch 1, dadurch gekennzeichnet, daß e die Zahl Null bedeutet.

**9.** Verfahren nach Anspruch 1, dadurch gekennzeichnet, daß $R^2$ und $R^3$ beide für Wasserstoff stehen.

**10.** Verfahren zum Färben und Bedrucken von hydroxy- und/oder carbonamidgruppenhaltigem Material, vorzugsweise Fasermaterial, bei welchem man einen Farbstoff auf das Material aufbringt und den Farbstoff auf dem Material mittels Wärme oder mit Hilfe eines alkalisch wirkenden Mittels oder mittels Wärme und mit Hilfe eines alkalisch wirkenden Mittels fixiert, dadurch gekennzeichnet, daß man als Farbstoff einen Phthalocyaninfarbstoff von mindestens einem der Ansprüche 1 bis 9 verwendet.